(19) Europäisches Patentamt / European Patent Office / Office européen des brevets

(11) **EP 3 076 091 B1**

(12) **EUROPEAN PATENT SPECIFICATION**

(45) Date of publication and mention
of the grant of the patent:
**29.07.2020  Bulletin 2020/31**

(51) Int Cl.:
*F24F 11/30* *(2018.01)*    *F24F 110/10* *(2018.01)*
*F24F 11/62* *(2018.01)*    *G05D 23/19* *(2006.01)*

(21) Application number: **13898338.2**

(22) Date of filing: **26.11.2013**

(86) International application number:
**PCT/JP2013/081809**

(87) International publication number:
**WO 2015/079502 (04.06.2015 Gazette 2015/22)**

(54) **CONTROL DEVICE FOR AIR CONDITIONER**

STEUERUNGSVORRICHTUNG FÜR EINE KLIMAANLAGE

DISPOSITIF DE COMMANDE POUR CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.10.2016  Bulletin 2016/40**

(73) Proprietor: **Mitsubishi Electric Corporation
Tokyo 100-8310 (JP)**

(72) Inventors:
• **TAKEDA, Emi
Tokyo 100-8310 (JP)**
• **ITO, Shinichi
Tokyo 100-8310 (JP)**
• **UNEZAKI, Fumitake
Tokyo 100-8310 (JP)**
• **YANO, Hirotoshi
Tokyo 100-8310 (JP)**
• **YOSHIKAWA, Toshiaki
Tokyo 100-8310 (JP)**
• **MATSUMOTO, Takashi
Tokyo 100-8310 (JP)**
• **SUGIYAMA, Daisuke
Tokyo 100-8310 (JP)**

(74) Representative: **Mewburn Ellis LLP
Aurora Building
Counterslip
Bristol BS1 6BX (GB)**

(56) References cited:
EP-A1- 2 789 925        JP-A- H0 261 449
JP-A- H1 061 995        JP-A- S6 329 136
JP-A- S60 142 136       JP-A- S62 293 039
JP-B2- 2 735 395        JP-B2- H07 107 459
US-A1- 2012 085 831

**Description**

Technical Field

The present invention relates to a controller for an air-conditioning apparatus.

Background Art

Conventionally, there has been a controller for an air-conditioning apparatus, which is configured to perform preliminary operation control to make an indoor temperature reach a target temperature at a designated time (see, for example, Patent Literature 1).
JP H10 61995A discloses an air conditioner which can obtain the optimum operation time until on-timer set time from the start of operation.

Citation List

Patent Literature

Patent Literature 1: Japanese Unexamined Patent Application Publication No. Sho 60-142136 (line 8 to line 20 in the upper left column on page 163)

Summary of Invention

Technical Problem

In the related art disclosed in Patent Literature 1, preliminary operation control is performed in which an air-conditioning apparatus is activated before the designated time ("preliminary operation"). The preliminary operation control is an operation in which time until the target temperature is reached is measured, and graph information corresponding to duration of the preliminary operation (preliminary operation time) is corrected based on a measurement result to determine next preliminary operation time.
In other words, in the related art, the time it takes for the indoor temperature to reach the target temperature is learned to determine the time preliminary operation time. Meanwhile, in the related art in which general air conditioning control is performed, an operation in which, as the indoor temperature approaches the target temperature, an air conditioning capacity is reduced to make the indoor temperature gradually reach the target temperature is performed. For example, in the related art in which the general air conditioning control is performed, when it has taken a long time for the indoor temperature from approaching the target temperature $\pm 1$ degree C until the target temperature is reached, the preliminary operation time is corrected to be increased. Moreover, when a user enters or exits a room before or after the designated time, there are variations in heat load such as a heat load generated by opening and closing of a door, heat generation of a person, and heat generation of home electrical appliances such as a cooking appliance and a lighting appliance, and hence the time it takes for the indoor temperature to reach the target temperature varies, for example, the time is increased or reduced depending on conditions.
Therefore, in the related art, an excessive preliminary operation is performed to lead to excessive power consumption, or a preliminary operation falls short to compromise comfortableness. In other words, in the related art, there is a problem in that a reduction in amount of power consumption and an improvement in comfortableness cannot be balanced.
The present invention has been made to overcome the above-mentioned problem, and therefore has an object to provide a controller for an air-conditioning apparatus, which is capable of balancing a reduction in amount of power consumption and an improvement in comfortableness.

Solution to Problem

According to one embodiment of the present invention, there is provided an air-conditioning apparatus controller as set forth in claim 1.

Advantageous Effects of Invention

According to the present invention, the preliminary operation is controlled based on a temperature width allowed by a user to provide an effect of being capable of balancing the reduction in amount of power consumption and the improvement in comfortableness.

Brief Description of Drawings

[Fig. 1] Fig. 1 is a diagram illustrating an example of a functional configuration of an operation time correction unit 1 according to Embodiment 1 of the present invention.

[Fig. 2] Fig. 2 is a diagram illustrating an example of a result of correcting a next preheating start time when an indoor temperature Ta is within an allowable range $\Delta Tm$ at a designated time in a heating operation according to Embodiment 1 of the present invention.

[Fig. 3] Fig. 3 is a diagram illustrating an example of a result of correcting a next precooling start time when the indoor temperature Ta is within the allowable range $\Delta Tm$ at the designated time in a cooling operation according to Embodiment 1 of the present invention.

[Fig. 4] Fig. 4 is a diagram illustrating an example of a result of correcting a next preheating start time when the indoor temperature Ta is outside the allowable range $\Delta Tm$ and is higher than the allowable range $\Delta Tm$ at the designated time in the heating operation according to Embodiment 1 of the present invention.

[Fig. 5] Fig. 5 is a diagram illustrating an example of a result of correcting the next preheating start time when the indoor temperature Ta is outside the allowable range $\Delta Tm$ and is lower than the allowable range $\Delta Tm$ at the designated time in the heating operation according to Embodiment 1 of the present invention.

[Fig. 6] Fig. 6 is a diagram illustrating an example of a result of correcting a next precooling start time when the indoor temperature Ta is outside the allowable range $\Delta Tm$ and is lower than the allowable range $\Delta Tm$ at the designated time in the cooling operation according to Embodiment 1 of the present invention.

[Fig. 7] Fig. 7 is a diagram illustrating an example of a result of correcting the next precooling start time when the indoor temperature Ta is outside the allowable range $\Delta Tm$ and is higher than the allowable range $\Delta Tm$ at the designated time in the cooling operation according to Embodiment 1 of the present invention.

[Fig. 8] Fig. 8 is a diagram illustrating an example of an air-conditioning apparatus 101 according to Embodiment 1 of the present invention.

[Fig. 9] Fig. 9 is a diagram illustrating an example of a functional configuration of an air-conditioning apparatus control module 201 according to Embodiment 1 of the present invention.

[Fig. 10] Fig. 10 is a diagram illustrating a example of configuration of a storage unit 246 according to Embodiment 1 of the present invention.

[Fig. 11] Fig. 11 is a flow chart illustrating a control example of the air-conditioning apparatus control module 201 according to Embodiment 1 of the present invention.

[Fig. 12] Fig. 12 is a flow chart illustrating precooling/preheating time computation process according to Embodiment 1 of the present invention.

[Fig. 13] Fig. 13 is a flow chart illustrating refrigeration cycle operation processing according to Embodiment 1 of the present invention.

[Fig. 14] Fig. 14 is a diagram illustrating an example of an air-conditioning apparatus 101 according to Embodiment 2 of the present invention.

[Fig. 15] Fig. 15 is a diagram illustrating an example of a functional configuration of an air-conditioning apparatus control module 201 according to Embodiment 3 of the present invention.

[Fig. 16] Fig. 16 is a diagram illustrating an example of a functional configuration of an air-conditioning apparatus control module 201 according to Embodiment 4 of the present invention.

[Fig. 17] Fig. 17 is a diagram illustrating an example of a functional configuration of an air-conditioning apparatus control module 201 according to Embodiment 5 of the present invention.

[Fig. 18] Fig. 18 is a diagram illustrating an example of a functional configuration of an air-conditioning apparatus control module 201 according to Embodiment 6 of the present invention.

[Fig. 19] Fig. 19 is a diagram illustrating an example of a schematic configuration of a HEMS 2 according to Embodiment 7 of the present invention.

[Fig. 20] Fig. 20 is a diagram illustrating an example of implementing various modules in various devices or the like via recording media 401 according to Embodiment 8 of the present invention.

Description of Embodiments

Hereinafter, Embodiments of the present invention are described in detail with reference to the drawings. Note that, steps describing programs for performing operations in Embodiments of the present invention are processing performed in time series in the stated order. However, the steps may not necessarily be processed in time series, or may also include processing to be executed in parallel or independently.

Moreover, there is no limit as to whether various functions described in Embodiments of the present invention are to be realized by hardware or software. In other words, each of the block diagrams described in Embodiments of the present invention may be considered as a hardware block diagram or a software functional block diagram. For example, each of the block diagrams may be realized by hardware such as circuit devices, or may be realized by software executed on an arithmetic unit such as a processor (not shown).

Moreover, each block in the block diagrams described in Embodiments of the present invention may not be a separate component as long as a function thereof is implemented. Note that, in each of Embodiments 1 and 2 of the present invention, items not specifically stated are similar in Embodiments 1 to 8, and the same functions and components are denoted by the same reference symbols. Moreover, each of Embodiments 1 to 8 of the present invention may be implemented alone or in combination. In either case, advantageous effects to be described later are obtained. Moreover, various kinds of specific example settings described in Embodiments of the present invention are merely examples, and the present invention is not particularly limited thereto.

Moreover, in Embodiments of the present invention, the term "system" refers to an entire apparatus including a plurality of devices. Moreover, in Embodiments of the present invention, the term "network" refers to a mechanism in which at least two devices are connected so that information may be transmitted from one device to another device. The devices that communicate via the network may be independent devices, or may be internal blocks configured to form one apparatus. Moreover, in Embodiments of the present invention, the term "communication" may be wireless communication and wired communication, as well as communication in which the wireless communication and the wired communication are mixed. For example, the wireless communication may be performed in one section, and the wired communication may be performed in another section. Moreover, communication from one device to another device may be performed via the wired communication, and communication from the other device to yet another device may be performed via the wireless communication.

Embodiment 1.

(Configuration in Embodiment 1)

(Principle of the invention)

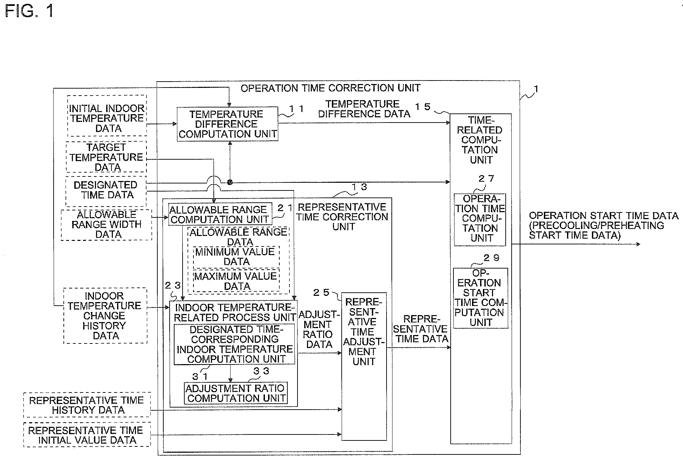

Fig. 1 is a diagram illustrating an example of a functional configuration of an operation time correction unit 1 according to Embodiment 1 of the present invention. As illustrated in Fig. 1, the operation time correction unit 1 receives input of indoor temperature data, target temperature data, designated time data, allowable range width data, indoor temperature change history data, representative time history data, representative time initial value data, and other data as inputs, and outputs operation start time data, or more specifically, precooling/preheating start time data. It is assumed here that the term "precooling/preheating start time" means any one of a precooling start time and a preheating start time.

The operation time correction unit 1 includes, for example, a temperature difference computation unit 11, a representative time correction unit 13, and time-related computation unit 15. The temperature difference computation unit 11 is supplied, for example, with initial indoor temperature data, the designated time data, and the indoor temperature change history data to compute a temperature difference between an initial indoor temperature Ta0 and an indoor temperature Ta1 at a designated time, and supplies a computation result as temperature difference data to the time-related computation unit 15. Note that, a specific example of configuration of the indoor temperature change history data is described later.

The representative time correction unit 13 is supplied with the target temperature data, the designated time data, the allowable range width data, the indoor temperature change history data, the representative time history data, the representative time initial value data, and other data, and outputs representative time data. It is assumed here that "representative time" contained in the representative time data is time required for an indoor temperature Ta to change by a unit temperature, for example, 1 degree C.

The representative time correction unit 13 includes, for example, an allowable range computation unit 21, an indoor temperature-related processing unit 23, and a representative time adjustment unit 25. When being supplied with the target temperature data and the allowable range width data, for example, the allowable range computation unit 21 determines minimum value data and maximum value data as an allowable range $\Delta Tm$ of a target temperature Tm. In other words, a range defined by a maximum value contained in the maximum value data and a minimum value contained in the minimum value data is the allowable range $\Delta Tm$ of the target temperature Tm. When having determined the minimum value data and the maximum value data as allowable range data, the allowable range computation unit 21 supplies the allowable range data to the indoor temperature-related processing unit 23.

When being supplied with the allowable range data, the designated time data, and the indoor temperature change history data, the indoor temperature-related processing unit 23 determines adjustment ratio data, and supplies the adjustment ratio data to the representative time adjustment unit 25. More specifically, the indoor temperature-related processing unit 23 includes, for example, a designated time-corresponding indoor temperature computation unit 31 and an adjustment ratio computation unit 33. The designated time-corresponding indoor temperature computation unit 31 determines the indoor temperature Ta1 corresponding to the designated time contained in the designated time data from among indoor temperatures Ta contained in the indoor temperature change history data.

In other words, the indoor temperature change history data includes, for example, data sets of the indoor temperature Ta and a time corresponding to the indoor temperature Ta to form time series data of the indoor temperatures Ta. Note that, the indoor temperature change history data has a data structure configured in a state in which, in addition to the data set described above, whether a change in indoor temperature Ta results from a cooling operation or a heating operation is linked, for example.

The designated time-corresponding indoor temperature computation unit 31 determines the indoor temperature Ta1 corresponding to the designated time, and supplies the indoor temperature Ta1 to the adjustment ratio computation unit 33. The adjustment ratio computation unit 33 determines an adjustment ratio based on the indoor temperature Ta1 corresponding to the designated time and the maximum value or the minimum value contained in the allowable range data, and supplies the adjustment ratio as the adjustment ratio data to the representative time adjustment unit 25. More specifically, when the change in indoor temperature Ta results from the heating operation, the adjustment ratio computation unit 33 determines the adjustment ratio based on the indoor temperature Ta1 corresponding to the designated time and the minimum value contained in the allowable range data. On the other hand, when the change in indoor temperature Ta results from the cooling operation, the adjustment ratio computation unit 33 determines the adjustment ratio based on the indoor temperature Ta1 corresponding to the designated time and the maximum value contained in the allowable range data.

The representative time adjustment unit 25 determines the representative time based on the adjustment ratio contained in the adjustment ratio data and representative time in the past contained in the representative time history data or a representative time initial value contained in representative time initial value data 267, which is to be described later, and supplies the representative time as the representative time data to the time-related computation unit 15. More specifically, when the representative time is determined for the first time, the representative time adjustment unit 25 determines the representative time based on the adjustment ratio and the representative time initial value. On the other hand, when the representative time has already been determined, the representative time adjustment unit 25 determines next representative time based on the adjustment ratio and the representative time in the past. Note that, the representative time initial value is an initial value set at the time of shipping a product, for example.

The time-related computation unit 15 determines an operation start time based on the temperature difference contained in the temperature difference data, the designated time contained in the designated time data, and the representative time contained in the representative time data, and outputs the operation start time as the operation start time data. The operation start time is the precooling/preheating start time, for example, and hence is output as the precooling/preheating start time data in reality.

More specifically, the time-related computation unit 15 includes an operation time computation unit 27 and an operation start time computation unit 29. The operation time computation unit 27 determines operation time, being a time duration of operation, for example, preheating time t or precooling time t based on the temperature difference contained in the temperature difference data and the representative time contained in the representative time data, and supplies the operation time to the operation start time computation unit 29. The operation start time computation unit 29 determines the operation start time based on the operation time and the designated time, and outputs the operation start time as the operation start time data.

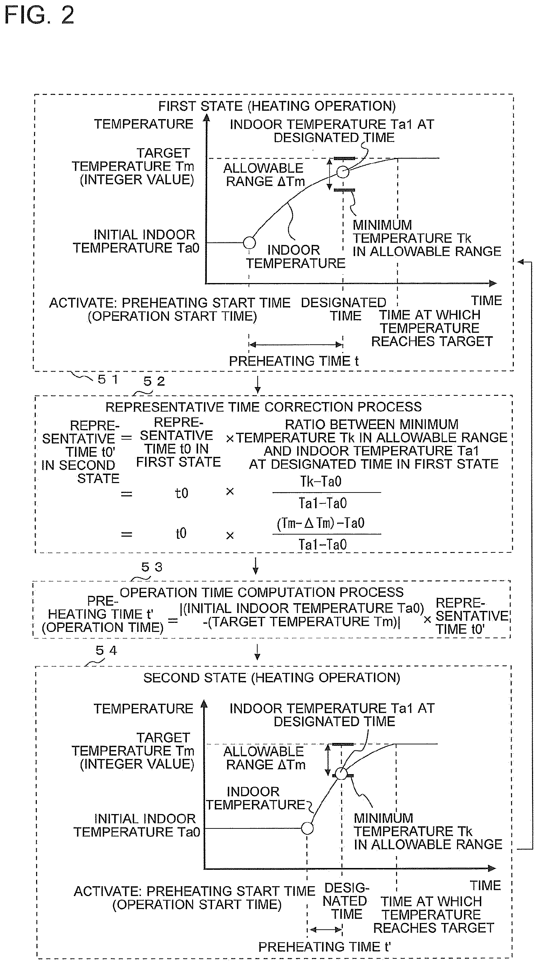

Fig. 2 is a diagram illustrating an example of a result of correcting a next preheating start time when the indoor temperature Ta is within the allowable range ΔTm at the designated time in the heating operation according to Embodiment 1 of the present invention. As illustrated in Fig. 2, a first state 51 during the heating operation transitions to a second state 54 during the heating operation via a representative time correction process 52 and an operation time computation process 53. In the first state 51 during the heating operation, the indoor temperature Ta1 at the designated time is within the allowable range ΔTm of the target temperature Tm. In other words, the indoor temperature Ta1 at the designated time, which has been the initial indoor temperature Ta0 at the operation start time, for example, the preheating start time, converges to within the allowable range ΔTm by the designated time. Here, a minimum temperature Tk in the allowable range ΔTm is set to the minimum value in the allowable range ΔTm.

The representative time correction process 52 is processing in which representative time t0 in the first state 51 is multiplied by a ratio between the minimum temperature Tk in the allowable range ΔTm and the indoor temperature Ta1 at the designated time in the first state 51 to determine representative time t0' in the second state 54. More specifically, the representative time correction process 52 is expressed as the following expression (1) as illustrated in Fig. 2. [Expression 1]

$$t0'=t0\times(Tk-Ta0)/(Ta1-Ta0) \quad (1)$$

Further, Tk is developed as shown by the following expression (2).
[Expression 2]

$$t0'=t0\times((Tm-\Delta Tm)-Ta0)/(Ta1-Ta0) \quad (2)$$

The operation time computation process 53 is processing in which a temperature difference between the initial indoor temperature Ta0 and the target temperature Tm is multiplied by the representative time t0' to determine the operation time, for example, preheating time t'. More specifically, the operation time computation process 53 is expressed as the following expression (3) as illustrated in Fig. 2.

In other words, as shown by the following expression (3), preliminary operation time, being time duration of the preliminary operation, for example, the preheating time t', is computed depending on a first temperature difference, which is the temperature difference between the initial indoor temperature Ta0 and the target temperature Tm. Then, the preliminary operation time is corrected based on a third temperature difference, which is a temperature difference between the indoor temperature Ta1 at the designated time and a temperature within the allowable range $\Delta$Tm of the target temperature Tm, for example, the minimum temperature Tk in the allowable range $\Delta$Tm. For example, the representative time t0' is used as corresponding to the third temperature difference.

Here, the initial indoor temperature Ta0 or the indoor temperature Ta1 at the designated time corresponds to a room temperature. Moreover, the minimum temperature Tk in the allowable range $\Delta$Tm corresponds to a second temperature. Note that, an example in which the second temperature is the minimum temperature Tk in the allowable range $\Delta$Tm has been described, but the present invention is not particularly limited thereto. More specifically, when the second temperature is within the allowable range $\Delta$Tm and when the third temperature difference is the allowable range $\Delta$Tm, the second temperature is the minimum temperature Tk in the allowable range $\Delta$Tm, with the result that an energy saving effect is obtained. When the third temperature difference is derived by a temperature that is lower than the target temperature Tm by a predetermined temperature, the second temperature is the temperature that is lower than the target temperature Tm by the predetermined temperature, with the result that the energy saving effect is obtained. When the third temperature difference is zero, an effect of improved comfortableness is obtained. In other words, an operation aimed at improving the energy saving effect or the comfortableness depending on the representative time t0' corresponding to the third temperature difference is performed. Therefore, an example of the energy saving effect is described next.
[Expression 3]

$$t'=|Ta0-Tm|\times t0' \quad (3)$$

In the second state 54 during the heating operation, the indoor temperature Ta1 at the designated time is at the minimum temperature Tk in the allowable range $\Delta$Tm. In other words, the indoor temperature Ta1 at the designated time, which has been the initial indoor temperature Ta0 at the operation start time, for example, the preheating start time, converges to within the allowable range $\Delta$Tm and to the minimum value in the allowable range $\Delta$Tm by the designated time. Stated differently, the representative time is recomputed based on a ratio between the minimum temperature Tk in the allowable range $\Delta$Tm and the indoor temperature Ta1 at the designated time to reduce the preheating time t to the preheating time t', with the result that an amount of power consumption is reduced.

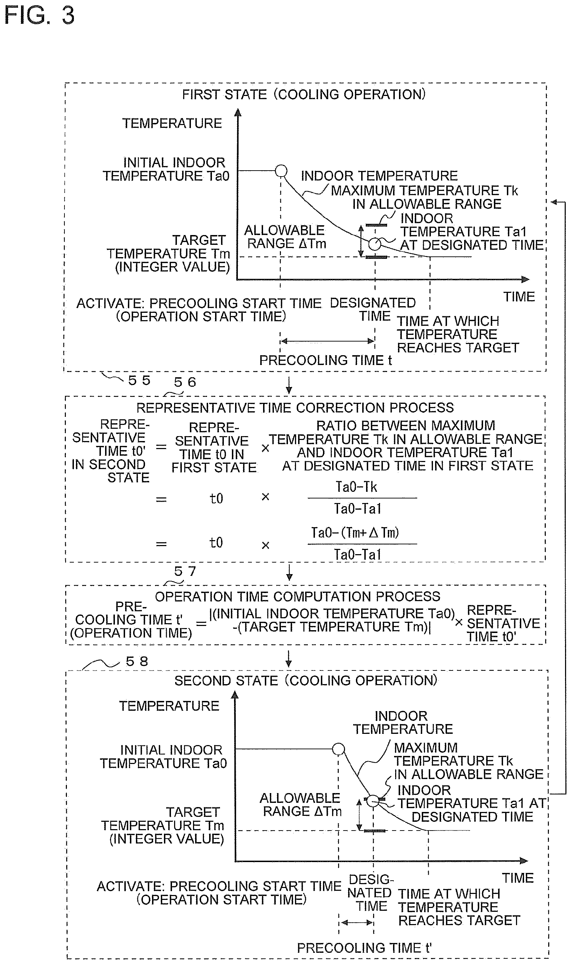

Fig. 3 is a diagram illustrating an example of a result of correcting a next precooling start time when the indoor temperature Ta is within the allowable range $\Delta$Tm at the designated time in a cooling operation according to Embodiment 1 of the present invention. As illustrated in Fig. 3, a first state 55 during the cooling operation transitions to a second state 58 during the cooling operation via a representative time correction process 56 and an operation time computation process 57. In the first state 55 during the cooling operation, the indoor temperature Ta1 at the designated time is within the allowable range $\Delta$Tm of the target temperature Tm. In other words, the indoor temperature Ta1 at the designated time, which has been the initial indoor temperature Ta0 at the operation start time, for example, the precooling start time, converges to within the allowable range $\Delta$Tm by the designated time. Here, a maximum temperature Tk in the allowable range $\Delta$Tm is set to the maximum value in the allowable range $\Delta$Tm.

The representative time correction process 56 is processing in which representative time t0 in the first state 55 is multiplied by a ratio between the maximum temperature Tk in the allowable range $\Delta$Tm and the indoor temperature Ta1 at the designated time in the first state 55 to determine representative time t0' in the second state 58. More specifically, the representative time correction process 56 is expressed as the following expression (4) as illustrated in Fig. 3.
[Expression 4]

$$t0'=t0\times(Ta0-Tk)/(Ta0-Ta1) \quad (4)$$

Further, Tk is developed as shown by the following expression (5).
[Expression 5]

$$t0'=t0\times(Ta0-(Tm-\Delta Tm))/(Ta0-Ta1) \quad (5)$$

The operation time computation process 57 is processing in which a temperature difference between the initial indoor temperature Ta0 and the target temperature Tm is multiplied by the representative time t0' to determine the operation time, for example, precooling time t'. More specifically, the operation time computation process 57 is expressed as the following expression (6) as illustrated in Fig. 3.

In other words, as shown by the following expression (6), the preliminary operation time, for example, the preheating time t' is computed depending on the first temperature difference, which is the temperature difference between the initial indoor temperature Ta0 and the target temperature Tm. Then, as to the preliminary operation time, the preliminary operation time is corrected based on a second temperature difference, which is a temperature difference between the indoor temperature Ta1 at the designated time and a temperature within the allowable range $\Delta Tm$ of the target temperature Tm, for example, the maximum temperature Tk in the allowable range $\Delta Tm$. For example, the representative time t0' is used as corresponding to the second temperature difference.

Here, the initial indoor temperature Ta0 or the indoor temperature Ta1 at the designated time corresponds to a room temperature. Moreover, the maximum temperature Tk in the allowable range $\Delta Tm$ corresponds to the first temperature. Note that, an example in which the first temperature is the maximum temperature Tk in the allowable range $\Delta Tm$ has been described, but the present invention is not particularly limited thereto. More specifically, when the first temperature is within the allowable range $\Delta Tm$ and when a second temperature difference is the allowable range $\Delta Tm$, the first temperature is the maximum temperature Tk in the allowable range $\Delta Tm$, with the result that an energy saving effect is obtained. When the second temperature difference derives a temperature that is higher than the target temperature Tm by a predetermined temperature, the first temperature is the temperature that is higher than the target temperature Tm by the predetermined temperature, with the result that the energy saving effect is obtained. When the second temperature difference is zero, an effect of improved comfortableness is obtained. In other words, an operation aimed to improve the energy saving effect or the comfortableness depending on the representative time t0' corresponding to the second temperature difference is performed. An example of the energy saving effect is described next.
[Expression 6]

$$t'=|Ta0-Tm|\times t0' \quad (6)$$

In the second state 58 during the cooling operation, the indoor temperature Ta1 at the designated time is at the maximum temperature Tk in the allowable range $\Delta Tm$. In other words, the indoor temperature Ta1 at the designated time, which has been the initial indoor temperature Ta0 at the operation start time, for example, the precooling start time, is within the allowable range $\Delta Tm$ and to the maximum value in the allowable range $\Delta Tm$ by the designated time. Stated differently, the representative time is recomputed based on a ratio between the maximum temperature Tk in the allowable range $\Delta Tm$ and the indoor temperature Ta1 at the designated time to reduce the precooling time t to the precooling time t', with the result that an amount of power consumption is reduced.

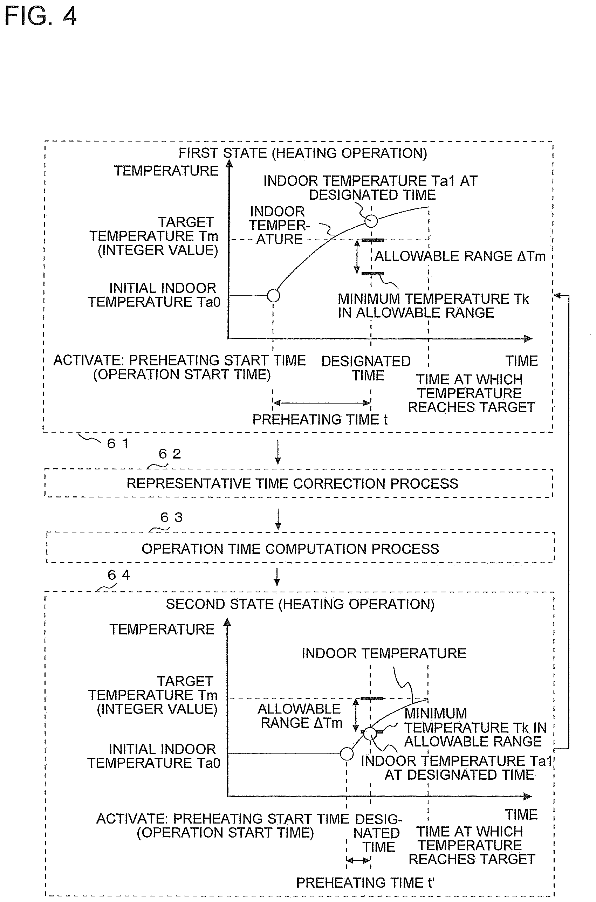

Fig. 4 is a diagram illustrating an example of a result of correcting a next preheating start time in the case where the indoor temperature Ta is outside the allowable range $\Delta Tm$ and is higher than the allowable range $\Delta Tm$ at the designated time in the heating operation according to Embodiment 1 of the present invention. As illustrated in Fig. 4, in a first state 61, the indoor temperature Ta1 at the designated time exceeds the allowable range $\Delta Tm$. On the other hand, in a second state 64, the indoor temperature Ta1 at the designated time is at the minimum temperature Tk in the allowable range $\Delta Tm$. In other words, the preheating time t is reduced to the preheating time t', with the result that the amount of power consumption is reduced.

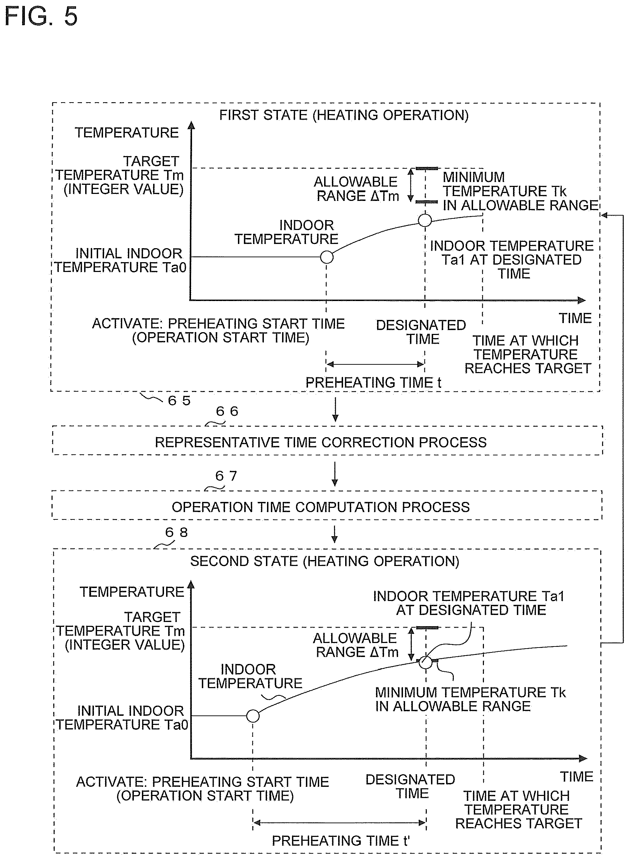

Fig. 5 is a diagram illustrating an example of a result of correcting the next preheating start time when the indoor temperature Ta is outside the allowable range $\Delta Tm$ and is lower than the allowable range $\Delta Tm$ at the designated time in the heating operation according to Embodiment 1 of the present invention. As illustrated in Fig. 5, in a first state 65, the indoor temperature Ta1 at the designated time does not reach the allowable range $\Delta Tm$. On the other hand, in a second state 68, the indoor temperature Ta1 at the designated time converges to the minimum temperature Tk in the allowable range $\Delta Tm$. In other words, in the second state 68, the representative time is changed to be longer with the lower end of the allowable range $\Delta Tm$ as a target, and hence in the second state 68 corresponding to next timer control, the preheating time t is extended to the preheating time t', and the indoor temperature Ta reaches within the allowable range $\Delta Tm$, with the result that the comfortableness is improved as compared to the first state 65.

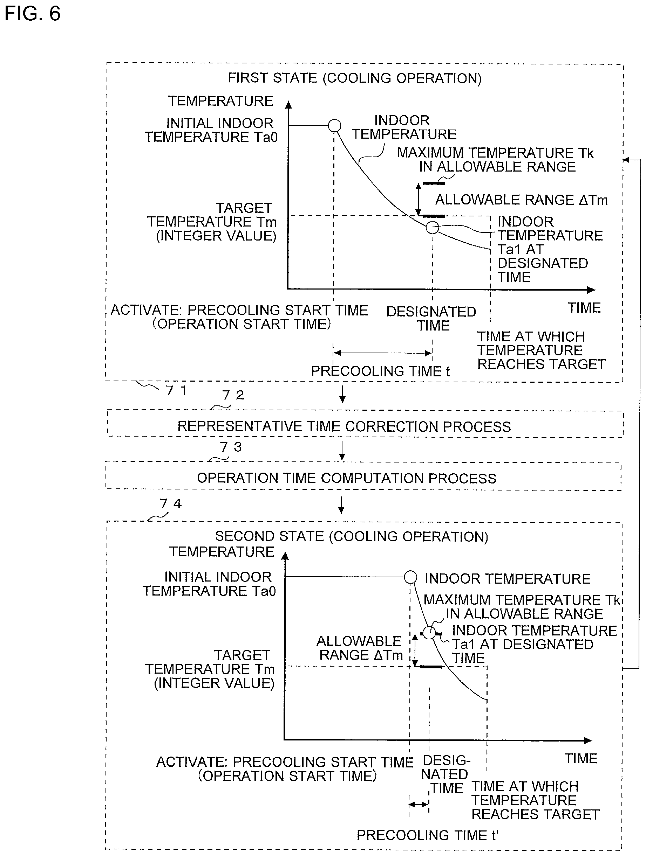

Fig. 6 is a diagram illustrating an example of a result of correcting a next precooling start time in the case where the indoor temperature Ta is outside the allowable range $\Delta Tm$ and is lower than the allowable range $\Delta Tm$ at the designated time in the cooling operation according to Embodiment 1 of the present invention. As illustrated in Fig. 6, in a first state 71, the indoor temperature Ta1 at the designated time is lower than the allowable range $\Delta Tm$. On the other hand, in a second state 74, the indoor temperature Ta1 at the designated time is at the maximum temperature Tk in the allowable range $\Delta Tm$. In other words, the precooling time t is reduced to the precooling time t', with the result that the amount of power consumption is reduced.

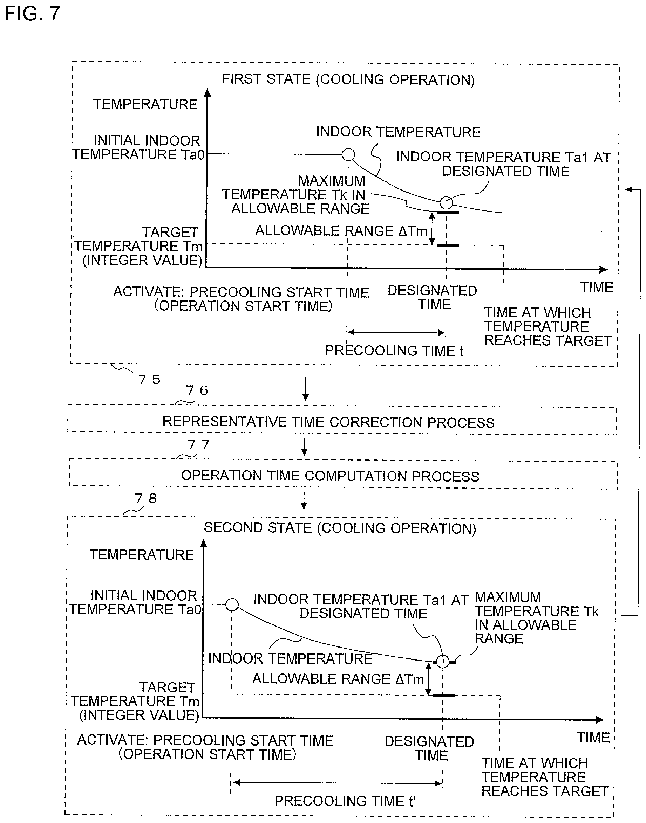

Fig. 7 is a diagram illustrating an example of a result of correcting the next precooling start time in the case where the indoor temperature Ta is outside the allowable range $\Delta Tm$ and is higher than the allowable range $\Delta Tm$ at the designated time in the cooling operation according to Embodiment 1 of the present invention. As illustrated in Fig. 7, in a first state 75, the indoor temperature Ta1 at the designated time does not reach the allowable range $\Delta Tm$. On the other hand, in a second state 78, the indoor temperature Ta1 at the designated time is at the maximum temperature Tk in the allowable range $\Delta Tm$. In other words, in the second state 78, the representative time is changed to be longer with the upper end of the allowable range $\Delta Tm$ as a target, and hence in the second state 78 corresponding to next timer control, the preheating time t is extended to the preheating time t', and the indoor temperature Ta reaches within the allowable range $\Delta Tm$, with the result that the comfortableness is improved as compared to the first state 75.

Stated differently, when referring to a history of heating operations of the air-conditioning apparatus 101 and determining that the indoor temperature Ta corresponding to the designated time is lower than the allowable range $\Delta Tm$, or when referring to a history of cooling operations of the air-conditioning apparatus 101 and determining that the indoor temperature Ta corresponding to the designated time is higher than the allowable range $\Delta Tm$, the operation time correction unit 1 sets the next operation start time to be earlier. When referring to the history of heating operations of the air-conditioning apparatus 101 and determining that the indoor temperature Ta corresponding to the designated time is higher than the allowable range $\Delta Tm$, or when referring to the history of cooling operations of the air-conditioning apparatus 101 and determining that the indoor temperature Ta corresponding to the designated time is lower than the allowable range $\Delta Tm$, the operation time correction unit 1 delays the next operation start time.

Moreover, when referring to the history of heating operations of the air-conditioning apparatus 101, the operation time correction unit 1 corrects the next operation start time based on a result of comparison between the indoor temperature Ta1 corresponding to the designated time and the minimum value in the allowable range $\Delta Tm$, and when referring to the history of cooling operations of the air-conditioning apparatus 101, the operation time correction unit 1 corrects the next operation start time based on a result of comparison between the indoor temperature Ta1 corresponding to the designated time and the maximum value in the allowable range $\Delta Tm$. When referring to the history of heating operations of the air-conditioning apparatus 101 and determining that the indoor temperature Ta1 corresponding to the designated time is higher than the minimum value in the allowable range $\Delta Tm$, or when referring to the history of cooling operations of the air-conditioning apparatus 101 and determining that the indoor temperature Ta1 corresponding to the designated time is lower than the maximum value in the allowable range $\Delta Tm$, the operation time correction unit 1 delays the next operation start time.

Note that, the allowable range $\Delta Tm$ of the target temperature Tm may be preset fixed values, or may be set by a user with a remote controller 115, which is to be described later. Moreover, as described later, when a power saving mode in which a power saving level from among a plurality of stages is selected by the user is configured, the allowable range $\Delta Tm$ may be determined depending on the power saving level.

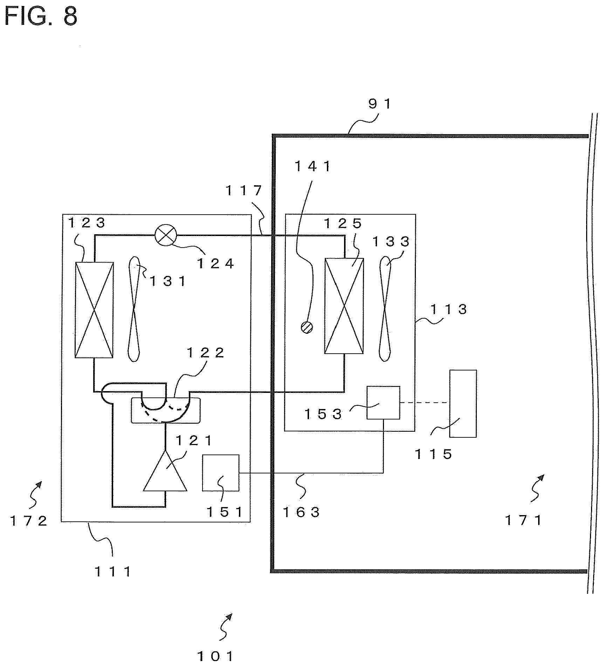

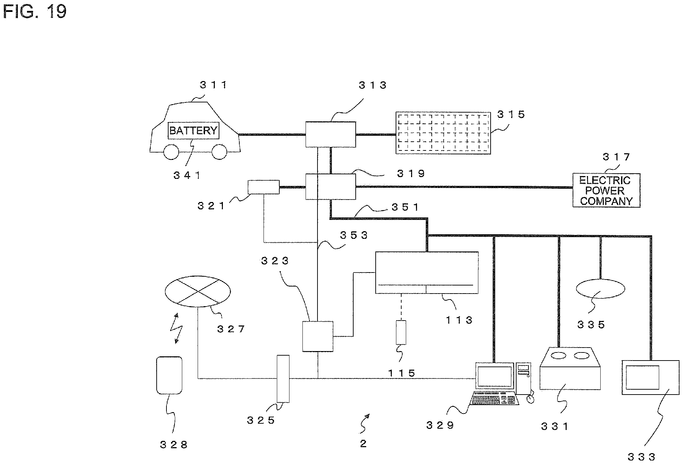

Moreover, when the allowable range $\Delta Tm$ or the power saving level is set by the user, means for setting the allowable range $\Delta Tm$ or the power saving level is not limited to the remote controller 115, which is to be described later, and may be a measurement control device 151 or a measurement control device 153, described later with reference to Fig. 8. Moreover, the means for setting may be a HEMS controller 323 configured to control a home energy management system (HEMS) 2, a communication device 328, a terminal 329, or other units, which is described later with reference to Fig. 19.

(Configuration of air-conditioning apparatus 101)

Fig. 8 is a diagram illustrating an example of the air-conditioning apparatus 101 according to Embodiment 1 of the present invention. As illustrated in Fig. 8, the air-conditioning apparatus 101 includes an outdoor unit 111 and an indoor unit 113. The outdoor unit 111 is provided outside a house 91, for example. The indoor unit 113 is provided inside the house 91, for example. The air-conditioning apparatus 101 air-conditions indoor space 171. In other words, for the air-conditioning apparatus 101, the indoor space 171 is space subjected to air-conditioning.

For example, the indoor unit 113 is placed in a place where conditioned air may be supplied to the indoor space 171, for example, on a wall forming the indoor space 171. The air-conditioning apparatus 101 blows out the conditioned air, for example, cold air from the indoor unit 113 to perform cooling, and blows out warm air to perform heating. The air-conditioning apparatus 101 forms a vapor-compression refrigeration cycle. A refrigerant pipe 117 connecting the outdoor unit 111 and the indoor unit 113 allows refrigerant to flow therethrough, and a communication line 163 connecting the outdoor unit 111 and the indoor unit 113 allows various signals to be transferred therethrough.

The outdoor unit 111 includes a compressor 121, a four-way valve 122, an outdoor heat exchanger 123, and an expansion valve 124. The outdoor unit 111 includes an outdoor fan 131 adjacent to the outdoor heat exchanger 123. The outdoor unit 111 includes the measurement control device 151. On the other hand, the indoor unit 113 includes an indoor heat exchanger 125. The indoor unit 113 includes an indoor fan 133 adjacent to the indoor heat exchanger 125. The indoor unit 113 includes the measurement control device 153. The indoor unit 113 includes an indoor temperature sensor 141. The remote controller 115 is provided in the indoor space 171. The remote controller 115 transmits and receives various signals to and from the measurement control device 153 included in the indoor unit 113.

The compressor 121, the four-way valve 122, the outdoor heat exchanger 123, the expansion valve 124, and the indoor heat exchanger 125 are connected in a ring shape with the refrigerant pipe 117 to form a refrigerant circuit, and the refrigerant circulates through the refrigerant circuit while repeating compression and expansion to form the refrigeration cycle. The outdoor fan 131 is driven to generate a negative pressure inside the outdoor unit 111 and hence allow the outdoor unit 111 to take in outdoor air in outdoor space 172, supplies the outdoor air that has been taken in to the outdoor heat exchanger 123, and blows out the air inside the outdoor unit 111 from the outdoor unit 111 to the outdoor space 172 via the outdoor heat exchanger 123. The indoor fan 133 is driven to generate a negative pressure inside the indoor unit 113 and hence allow the indoor unit 113 to take in indoor air in the indoor space 171, supplies the indoor air that has been taken in to the indoor heat exchanger 125, and blows out the air inside the indoor unit 113 from the indoor unit 113 to the indoor space 171 via the indoor heat exchanger 125.

The compressor 121 compresses low-temperature and low-pressure refrigerant to form high-temperature and high-pressure refrigerant, and is driven by an inverter, for example. An operation capacity of the compressor 121 is controlled depending on air-conditioning situations. The four-way valve 122 is connected on a discharge side of the compressor 121 to change over a flow of the refrigerant depending on the operation of the air-conditioning apparatus 101, for example, the cooling operation or the heating operation. The outdoor heat exchanger 123 exchanges heat between cooling energy or heating energy supplied from the refrigerant flowing through the refrigerant circuit and the outdoor air supplied from the outdoor space 172. The expansion valve 124 is connected between the outdoor heat exchanger 123 and the indoor heat exchanger 125, is formed of a valve configured to adjust an opening degree, and adjusts the opening degree to decompress and expand the refrigerant. The indoor heat exchanger 125 exchanges heat between the cooling energy or the heating energy supplied from the refrigerant flowing through the refrigerant circuit and the indoor air in the indoor space 171.

Therefore, the air-conditioning apparatus 101 supplies the indoor air, which has exchanged heat in the indoor heat exchanger 125, as the conditioned air to the indoor space 171 to perform cooling and heating of the indoor space 171. Here, measurement information, which is a detection result of the indoor temperature sensor 141, is supplied to the measurement control device 153. The measurement control device 153 supplies the measurement information, which is the detection result of the indoor temperature sensor 141, to the measurement control device 151 via the communication line 163. Note that, the communication line 163 may be wired or wireless, and a communication medium is not particularly limited.

The measurement control device 151 and the measurement control device 153 issue commands on operations of the air-conditioning apparatus 101 with preinstalled control programs based on detecting information and operation information supplied from various sensors equipped in the air-conditioning apparatus 101, such as the indoor temperature sensor 141, and on setting information set by the user of the air-conditioning apparatus 101. In other words, the measurement control device 151 and the measurement control device 153 have control over the whole of the air-conditioning apparatus 101. For example, each of the measurement control device 151 and the measurement control device 153 is formed of a microcomputer or the like.

For example, the measurement control device 151 controls a driving frequency of the compressor 121, controls the four-way valve 122 to be changed over, controls a rotation speed of the outdoor fan 131, and controls the opening degree of the expansion valve 124. Moreover, for example, the measurement control device 153 controls a rotation speed of the indoor fan 133. Such operations are performed, and as a result, the measurement control device 151 and the measurement control device 153 issue commands on various operations of the air-conditioning apparatus 101. Note that, the measurement control device 151 may control the rotation speed of the indoor fan 133, and the measurement control device 153 may control the driving frequency of the compressor 121, control the four-way valve 122 to be changed over, control the rotation speed of the outdoor fan 131, and control the opening degree of the expansion valve 124.

As described above, the indoor temperature sensor 141 is equipped in the indoor unit 113. The indoor temperature sensor 141 measures a temperature of the indoor air in the indoor space 171, which has been taken into the indoor unit 113, and supplies a measurement result to the measurement control device 153 and other devices. Note that, although not shown, the air-conditioning apparatus 101 is also equipped with other such various sensors.

For example, a discharge-side pressure sensor is equipped on the discharge side of the compressor 121, and the discharge-side pressure sensor measures a pressure of the refrigerant discharged from the compressor 121. Moreover, for example, a suction-side pressure sensor is equipped on an intake side of the compressor 121, and the suction-side pressure sensor measures a pressure of the refrigerant that has been taken into the compressor 121. Moreover, for example, a discharge-side temperature sensor is equipped on the discharge side of the compressor 121, and the discharge-side temperature sensor measures a temperature of the refrigerant discharged from the compressor 121. Moreover, for example, an intake-side temperature sensor is equipped on the intake side of the compressor 121, and the intake-side temperature sensor measures a temperature of the refrigerant that is taken into the compressor 121. Moreover, for example, an outdoor temperature sensor is equipped in the outdoor unit 111, and the outdoor temperature sensor measures a temperature of the outdoor air in the outdoor space 172.

Next, it is assumed that with the above-mentioned air-conditioning apparatus 101 as a precondition, the user of the air-conditioning apparatus 101 operates, for example, the remote controller 115 or other devices to issue an operation start command to the air-conditioning apparatus 101. The operation start command contains an operation mode such as the cooling operation or the heating operation, and hence the operation mode is set at the same time as the operation start command is given to the air-conditioning apparatus 101.

(Cooling operation)

For example, when the cooling operation is selected as the operation mode, an operation of the refrigeration cycle is performed as follows. The refrigerant discharged from the compressor 121 passes through the four-way valve 122 and flows to the outdoor heat exchanger 123. The refrigerant that has flowed to the outdoor heat exchanger 123 exchanges heat with the outdoor air taken in from the outdoor space 172 to be condensed and liquefied, and flows to the expansion valve 124. The refrigerant that has flowed to the expansion valve 124 is decompressed by the expansion valve 124, and flows to the indoor heat exchanger 125. The refrigerant that has flowed to the indoor heat exchanger 125 exchanges heat with the indoor air that has been taken in from the indoor space 171 to be evaporated and gasified, passes through the four-way valve 122, and is taken into the compressor 121 again. The refrigerant flows as described above so that the indoor air that has been taken in from the indoor space 171 is cooled in the indoor heat exchanger 125. An amount of exchanged heat between the refrigerant and the indoor air in the indoor heat exchanger 125 is called a "cooling capacity Q". A rotation speed of the compressor 121 is changed to adjust the cooling capacity Q.

(Heating operation)

For example, when the heating operation is selected as the operation mode, an operation of the refrigeration cycle is performed as follows. The refrigerant discharged from the compressor 121 passes through the four-way valve 122 and flows to the indoor heat exchanger 125. The refrigerant flowing to the indoor heat exchanger 125 exchanges heat with the indoor air taken in from the indoor space 171 to be condensed and liquefied, and flows to the expansion valve 124. The refrigerant that flowed to the expansion valve 124 is decompressed by the expansion valve 124, and flows to the outdoor heat exchanger 123. The refrigerant flowing to the outdoor heat exchanger 123 exchanges heat with the outdoor air that is taken in from the outdoor space 172 to be evaporated and gasified, passes through the four-way valve 122, and is taken into the compressor 121 again. The refrigerant flows as described above so that the indoor air that is taken in from the indoor space 171 is heated in the indoor heat exchanger 125. An amount of exchanged heat between the refrigerant and the indoor air in the indoor heat exchanger 125 is called a "heating capacity Q". A rotation speed of the compressor 121 is changed to adjust the heating capacity Q.

Note that, in the above description, one air-conditioning apparatus 101 has been described, but the number of air-conditioning apparatuses is not particularly limited. For example, there may be a plurality of air-conditioning apparatuses 101. Moreover, in the above description, the air-conditioning apparatus 101 including one outdoor unit 111 and one indoor unit 113 has been described, but the configuration of the air-conditioning apparatus 101 is not particularly limited. For example, the air-conditioning apparatus 101 may include one outdoor unit 111 and a plurality of indoor units 113. Alternatively, the air-conditioning apparatus 101 may include one outdoor unit 111, a relay unit (not shown), a check valve (not shown), and a plurality of indoor units 113 to perform a simultaneous cooling and heating operation.

Moreover, for the purpose of illustration, the outdoor unit 111 and the indoor unit 113 are installed at a short distance from each other, but it is not particularly limited where to arrange the outdoor unit 111 and the indoor unit 113. For example, the outdoor unit 111 may be installed on a roof of a building (not shown), and the indoor unit 113 may be installed above a ceiling.

In short, any air-conditioning apparatus 101 forming the refrigerant circuit may be employed, and a detailed configuration or the like thereof is not particularly limited.

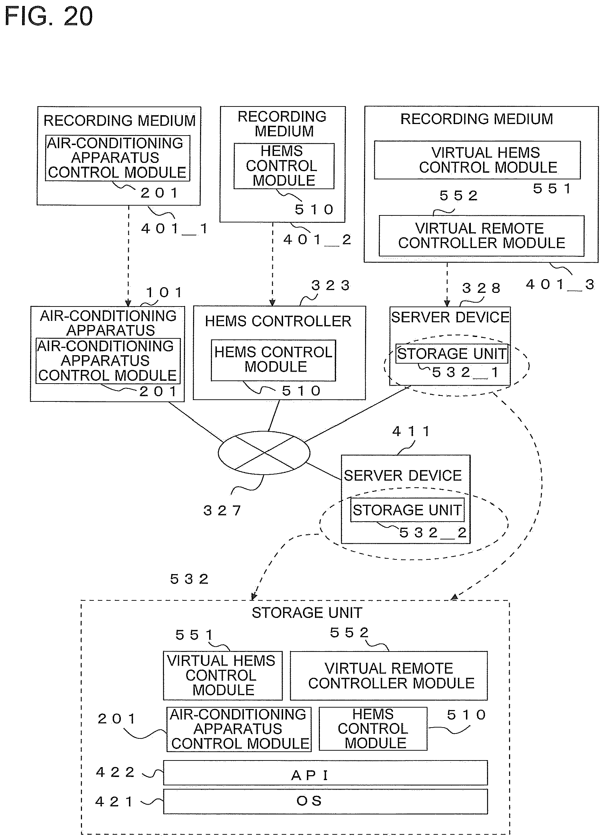

Moreover, the functional configuration to be described later may be implemented in the measurement control device 151, for example, but where to implement the functional configuration is not particularly limited. For example, the functional configuration to be described later may be implemented in the measurement control device 153. Moreover, for example, the functional configuration to be described later may be implemented in the HEMS controller 323, which is described later with reference to Fig. 19. Moreover, for example, the functional configuration to be described later may be implemented in a server device 411, which is described later with reference to Fig. 20.

In short, the functional configuration to be described later is not particularly limited as to where to be implemented. For example, when it is assumed that a plurality of terminals 329, which are described later with reference to Fig. 19, are connected via a public line 327, which is described later with reference to Fig. 19, the functional configuration to be described later may be physically distributed and implemented in a distributed manner among the plurality of terminals 329. For example, a function of a refrigeration cycle control unit 211 to be described later and a function of a timer control unit 213 to be described later may be implemented in physically separate places, and organically function as one system via the communication medium such as a public line 327. In other words, the functional configuration to be described later as cloud computing may supply various commands to the air-conditioning apparatus 101 to control the air-conditioning apparatus 101.

(Operation mode)

The above-mentioned designated time, for example, a presence-in-room start time, the operation mode (cooling/ heating/ dehumidifying or other modes), and the target temperature Tm are input to the remote controller 115 by the user, and hence, as described above, the air-conditioning apparatus 101 is activated the preheating time t' earlier to perform the heating operation, for example, so that the indoor temperature Ta reaches within the allowable range ΔTm from the target temperature Tm at the designated time. Note that, the input of various settings to the timer control unit 213 to be described later is not particularly limited to the remote controller 115. For example, the input may be provided from the measurement control device 151 or the measurement control device 153. Alternatively, the input may be provided from the HEMS controller 323, the communication device 328, or the terminal 329, which is described later with reference to Fig. 19. In the input of the various settings, the inputs of the operation mode (cooling/ heating/ dehumidifying or other modes) and the target temperature Tm may be omitted, and in that case, the inputs may be simplified by using existing operation mode and target temperature Tm to improve convenience of the user. The phrase "existing operation mode and target temperature Tm" refers to the operation mode and the target temperature Tm stored in any one of the remote controller 115, the measurement control device 151, the measurement control device 153, the HEMS controller 323, the communication device 328, and the terminal 329.

(Functional configuration for controlling air-conditioning apparatus 101)

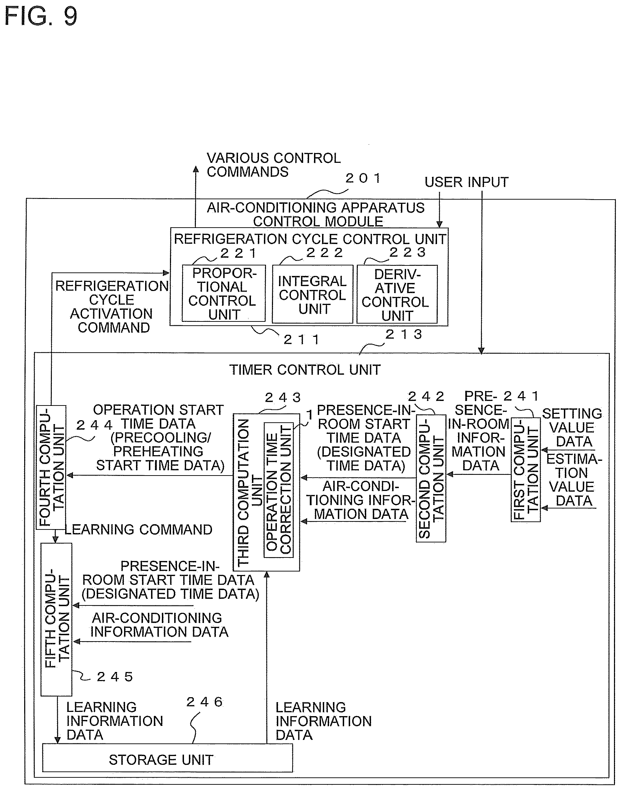

Fig. 9 is a diagram illustrating an example of a functional configuration of an air-conditioning apparatus control module 201 according to Embodiment 1 of the present invention. As illustrated in Fig. 9, the air-conditioning apparatus control module 201 includes the refrigeration cycle control unit 211 and the timer control unit 213.

The refrigeration cycle control unit 211 includes, for example, a proportional control unit 221, an integral control unit 222, and a derivative control unit 223. The refrigeration cycle control unit 211 determines the operation capacity of the compressor 121 so that a measurement value of the indoor temperature sensor 141, which detects a temperature of the indoor space 171 as the indoor temperature Ta, becomes the target temperature Tm set by the user.

The proportional control unit 221 performs proportional control. More specifically, the proportional control unit 221 controls the rotation speed of the compressor 121 in proportion to a temperature difference between the indoor temperature Ta and the target temperature Tm to issue an operation command to change the cooling capacity Q of the air-conditioning apparatus 101 or the heating capacity Q of the air-conditioning apparatus 101 so that the indoor temperature Ta is at the target temperature Tm.

The integral control unit 222 performs integral control. More specifically, when a change with time of the indoor temperature Ta is smaller than a preset setting value, it takes time for the indoor temperature Ta to reach the target temperature Tm, and hence the integral control unit 222 increases the rotation speed of the compressor 121 to issue an operation command to increase the cooling capacity Q of the air-conditioning apparatus 101 or the heating capacity Q of the air-conditioning apparatus 101 so that the indoor temperature Ta reaches the target temperature Tm.

When the indoor temperature Ta is changed abruptly due to opening and closing of a window (not shown) or other reasons, the derivative control unit 223 changes the operation capacity of the compressor 121 depending on the change with time of the indoor temperature Ta.

The air-conditioning apparatus 101 stops operating the compressor 121 when the indoor temperature Ta reaches the target temperature Tm as a result of performing the above-mentioned control, and reactivates the compressor 121 when the temperature difference between the indoor temperature Ta and the target temperature Tm becomes the preset value or larger.

The timer control unit 213 executes timer control, and includes a first computation unit 241, a second computation unit 242, a third computation unit 243, a fourth computation unit 244, a fifth computation unit 245, and a storage unit 246 as illustrated in Fig. 9, for example. Note that, in the third computation unit 243, the above-mentioned operation time correction unit 1 is configured, for example.

The first computation unit 241 determines presence-in-room information based on the setting value set by the user or a value estimated from past information. The presence-in-room information contains a time at which the user starts to stay in the room, a time span during which the user continues staying in the room, and a time at which the user leaves the room, for example. When the presence-in-room information is set by the user, the remote controller 115 is used, for example.

Note that, the device with which the user sets the presence-in-room information is not limited to the remote controller 115, and may be the measurement control device 151 or the measurement control device 153, which has been described above. Alternatively, the device may be the HEMS controller 323, the communication device 328, or the terminal 329, which is to be described later.

Moreover, when the presence-in-room information is set based on the value estimated from the past information, the past information on various devices present in the indoor space 171, for example, the remote controller 115 or other devices may be used to estimate the presence-in-room information, and the estimated presence-in-room information may be set. More specifically, a time at which the user first performs an operation on the remote controller 115 is stored in the remote controller 115 or the air-conditioning apparatus 101 in each particular time of day, such as the morning, the daytime, the evening, and the night. Next, the air-conditioning apparatus control module 201 collects the thus-stored times at which the remote controller 115 is used, estimates the time at which the user starts to stay in the room, that is, a presence-in-room start time based on collected results, and sets the estimated presence-in-room start time.

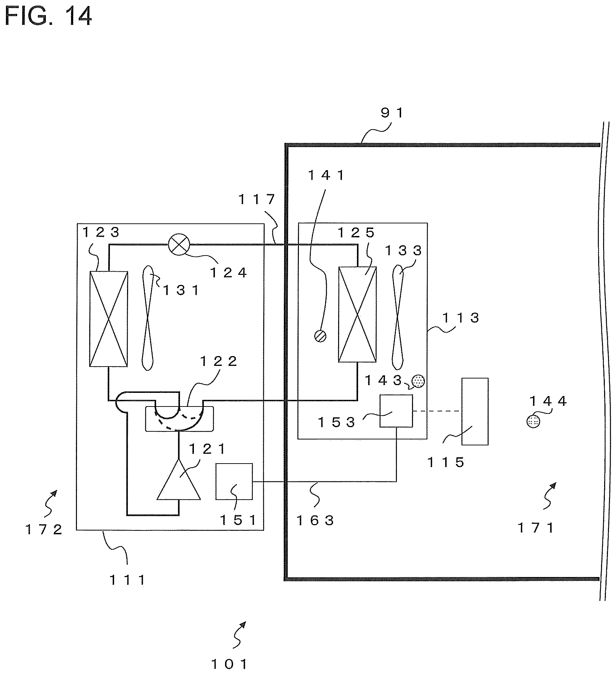

Note that, when a plurality of presence-in-room start times are obtained, the air-conditioning apparatus control module 201 may determine, for example, an average value of the plurality of presence-in-room start times to determine the average value as the presence-in-room start time. Moreover, the value estimated from the past information may use a detection result of an infrared sensor 143 or a human presence sensor 144, which is described later with reference to Fig. 14, to determine the presence-in-room information. Moreover, the value estimated from the past information may use opening/closing information of a room door (not shown), which is equipped in the indoor space 171, to determine the presence-in-room information. Note that, the operation of obtaining the presence-in-room information based on the value estimated from the past information is effective when it is assumed that the presence-in-room information is different day to day.

The second computation unit 242 determines the presence-in-room start time from the presence-in-room information, and supplies the determined presence-in-room start time to the third computation unit 243. The third computation unit 243 determines the precooling/preheating start time, that is, an activation time based on the presence-in-room start time, air-conditioning information, and learning information, and supplies the determined precooling/preheating start time to the fourth computation unit 244. The air-conditioning information is, for example, information relating to model characteristics of the air-conditioning apparatus 101, operation modes such as on or off of the operation, cooling, heating, air blowing, and dehumidifying, as well as the setting information such as the target temperature Tm, the allowable range $\Delta$Tm of the target temperature Tm, an air volume or a wind direction, and the power saving level, and measurement values of the various sensors, such as the indoor temperature Ta, a temperature of outside air, a radiation temperature, a refrigerant temperature, and a refrigerant pressure. The learning information is, for example, representative time t, which is required for the indoor temperature Ta to change by a unit temperature, for example, 1 degree C, and at the time of shipping the product, a predetermined initial value is stored in the storage unit 246.

Note that, the precooling/preheating start time may be downloaded to the HEMS controller 323 or other devices via a public line 327 and a communication unit 325, which are to be described later. Alternatively, the precooling/preheating start time may be designated directly by the user.

When the precooling/preheating start time has arrived, the fourth computation unit 244 supplies a refrigeration cycle activation command to the refrigeration cycle control unit 211, and supplies a learning command to the fifth computation unit 245. The fifth computation unit 245 acquires the air-conditioning information at the presence-in-room start time, and transmits the learning information to the storage unit 246. The air-conditioning information is, for example, information relating to the model characteristics of the air-conditioning apparatus 101, the operation mode such as on or off of the operation, cooling, heating, air blowing, and dehumidifying, as well as the setting information such as the target temperature Tm, the allowable range $\Delta$Tm of the target temperature Tm, the air volume or the wind direction, and the power saving level, and the measurement values of the various sensors, such as the indoor temperature Ta, the temperature of the outside air, the radiation temperature, the refrigerant temperature, and the refrigerant pressure.

Note that, the air-conditioning apparatus control module 201 may supply a control command to the measurement control device 151. Alternatively, the air-conditioning apparatus control module 201 may supply the control command to the measurement control device 153. Still alternatively, the air-conditioning apparatus control module 201 may supply control commands to driven devices of the air-conditioning apparatus 101, for example, the compressor 121, the four-way valve 122, the expansion valve 124, the outdoor fan 131, and the indoor fan 133 via the measurement control device 151 and the measurement control device 153. Yet alternatively, the air-conditioning apparatus control module 201 may supply the control commands to the driven devices of the air-conditioning apparatus 101, for example, the compressor 121, the four-way valve 122, the expansion valve 124, the outdoor fan 131, and the indoor fan 133 but not via the measurement control device 151 and the measurement control device 153.

The air-conditioning apparatus control module 201 has a schematic software configuration to execute the above-mentioned functions. On the other hand, the air-conditioning apparatus control module 201 may have any schematic hardware configuration as long as a ROM (Read Only Memory), a RAM (Random Access Memory), and a CPU (Central Processing Unit) are connected via a bus, and the bus, a storage device, an input device, an output device, the communication device, and a drive are connected via an input/output interface (all are not shown), for example.

Note that, the air-conditioning apparatus control module 201 corresponds to a controller for the air-conditioning apparatus according to the present invention.

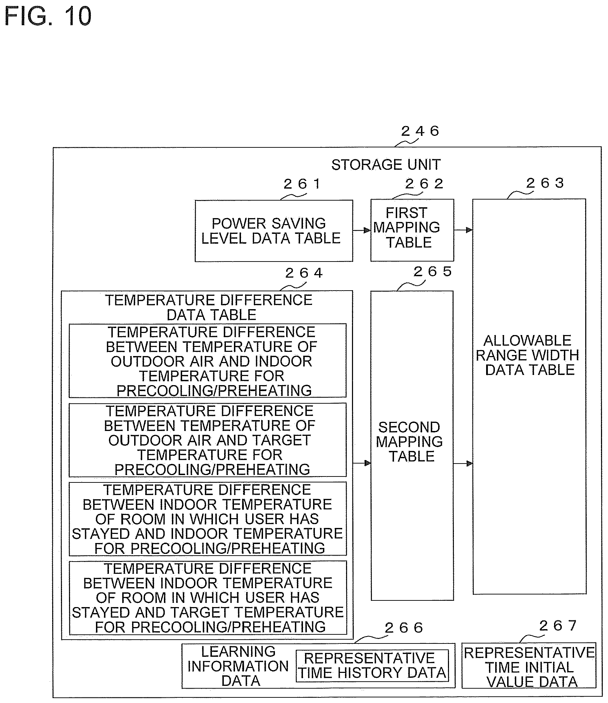

Fig. 10 is a diagram illustrating a example of configuration of the storage unit 246 according to Embodiment 1 of the present invention. As illustrated in Fig. 10, in the storage unit 246, a power saving level data table 261, a first mapping table 262, an allowable range width data table 263, a temperature difference data table 264, a second mapping table 265, learning information data 266, and the representative time initial value data 267 are configured. In the power saving level data table 261, a plurality of different power saving levels are set. In the allowable range width data table 263, a plurality of different allowable range widths are set. In the first mapping table 262, a mapping relationship for linking the power saving level data table 261 and the allowable range width data table 263 is set.

In the temperature difference data table 264, a temperature difference between the temperature of the outside air and the indoor temperature Ta for precooling or preheating, a temperature difference between the temperature of the outside air and the target temperature Tm for precooling or preheating, a temperature difference between the indoor temperature Ta of a room in which the user has stayed and the indoor temperature Ta for precooling or preheating, and a temperature difference between the indoor temperature Ta of the room in which the user has stayed and the target temperature Tm for precooling or preheating are set. In the second mapping table 265, a mapping relationship for linking the temperature difference data table 264 and the allowable range width data table 263 is set.

In the learning information data 266, the representative time history data is set. The representative time initial value data 267 is the representative time initial value set at the time of shipping the product, and is a default value of the representative time as described above. Note that, the data structure of the storage unit 246 described above is merely an example, and the present invention is not particularly limited thereto.

(Operation in Embodiment 1)

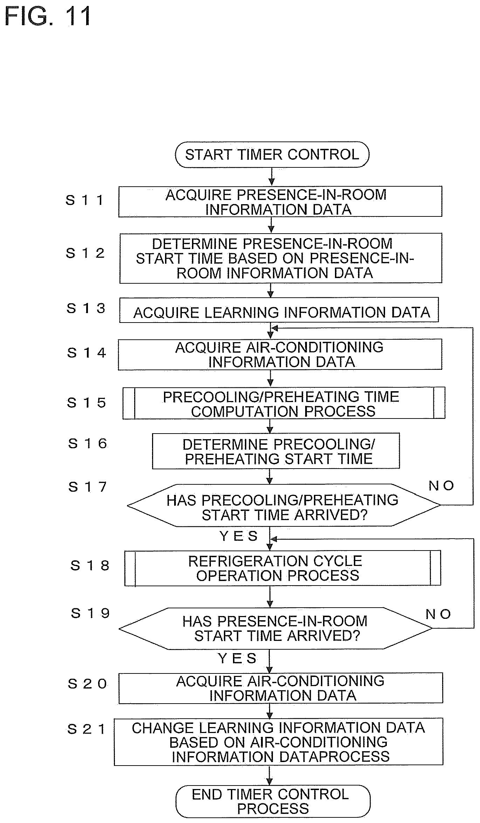

Fig. 11 is a flow chart illustrating a control example of the air-conditioning apparatus control module 201 according to Embodiment 1 of the present invention.

(Step S11)

The air-conditioning apparatus control module 201 acquires presence-in-room information data.

(Step S12)

The air-conditioning apparatus control module 201 determines the presence-in-room start time based on the presence-in-room information data.

(Step S13)

The air-conditioning apparatus control module 201 acquires the learning information data 266.

(Step S14)

The air-conditioning apparatus control module 201 acquires air-conditioning information data.

(Step S15)

The air-conditioning apparatus control module 201 executes precooling/preheating time computation process.

(Step S16)

The air-conditioning apparatus control module 201 determines the precooling/preheating start time.

(Step S17)

The air-conditioning apparatus control module 201 determines whether or not the precooling/preheating start time has arrived. When the precooling/preheating start time has arrived, the air-conditioning apparatus control module 201 proceeds to Step S18. On the other hand, when the precooling/preheating start time has not arrived, the air-conditioning apparatus control module 201 proceeds to Step S14.

(Step S18)

The air-conditioning apparatus control module 201 executes refrigeration cycle operation processing.

(Step S19)

When the presence-in-room start time has arrived, the air-conditioning apparatus control module 201 proceeds to Step S20. When the presence-in-room start time has not arrived, the air-conditioning apparatus control module 201 returns to Step S18.

(Step S20)

The air-conditioning apparatus control module 201 acquires the air-conditioning information data.

(Step S21)

The air-conditioning apparatus control module 201 changes the learning information data 266 based on the air-conditioning information data, and ends the processing.

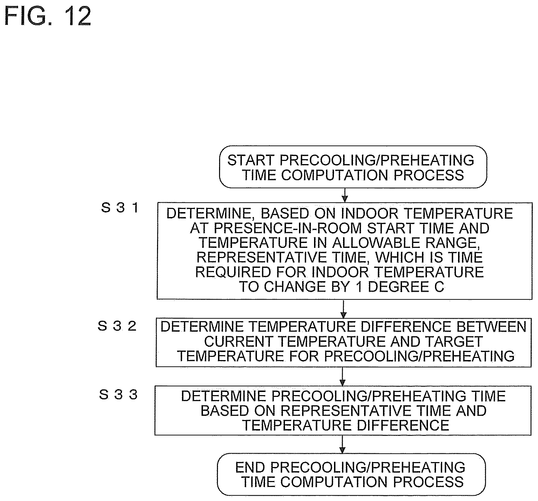

Fig. 12 is a flow chart illustrating precooling/preheating time computation process according to Embodiment 1 of the present invention.

(Step S31)

The air-conditioning apparatus control module 201 determines, based on the indoor temperature Ta at the presence-in-room start time and a temperature in the allowable range $\Delta$Tm, the representative time, which is time required for the indoor temperature Ta to change by 1 degree C.

(Step S32)

The air-conditioning apparatus control module 201 determines the temperature difference between the current indoor temperature Ta and the target temperature Tm for precooling or preheating.

(Step S33)

The air-conditioning apparatus control module 201 determines precooling/preheating time based on the representative time and the temperature difference, and ends the processing.

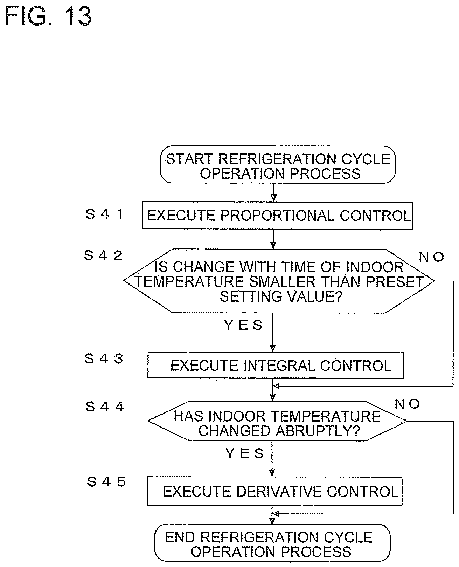

Fig. 13 is a flow chart illustrating refrigeration cycle operation processing according to Embodiment 1 of the present invention.

(Step S41)

The air-conditioning apparatus control module 201 executes the proportional control.

(Step S42)

The air-conditioning apparatus control module 201 determines whether or not the change with time of the indoor temperature Ta is smaller than the preset setting value. When the change with time of the indoor temperature Ta is smaller than the preset setting value, the air-conditioning apparatus control module 201 proceeds to Step S43. On the other hand, when the change with time of the indoor temperature Ta is not smaller than the preset setting value, the air-conditioning apparatus control module 201 proceeds to Step S44.

(Step S43)

The air-conditioning apparatus control module 201 executes the integral control.

(Step S44)

The air-conditioning apparatus control module 201 determines whether or not the indoor temperature Ta is changed abruptly. When the indoor temperature Ta is changed abruptly, the air-conditioning apparatus control module 201 proceeds to Step S45. On the other hand, when the indoor temperature Ta is not changed abruptly, the air-conditioning apparatus control module 201 ends the processing.

(Step S45)

The air-conditioning apparatus control module 201 executes derivative control, and ends the processing.
Note that, the above-mentioned order of executing the proportional control, the integral control, and the derivative control is merely an example, and the present invention is not particularly limited thereto.

(Effects of Embodiment 1)

From the above description, the air-conditioning apparatus control module 201 sets the allowable range $\Delta Tm$ to the target temperature Tm to avoid an excessive preliminary operation, with the result that excessive power consumption may be reduced. Therefore, the air-conditioning apparatus control module 201 may reduce the excessive power consumption while maintaining the comfortableness.
Moreover, when the indoor temperature Ta is not inside the allowable range $\Delta Tm$, the air-conditioning apparatus control module 201 starts the operation earlier so that the indoor temperature Ta falls within the allowable range $\Delta Tm$ in the next operation, with the result that the comfortableness may be maintained.
On the other hand, when the indoor temperature Ta has already exceeded the allowable range $\Delta Tm$, the air-conditioning apparatus control module 201 starts the operation later so that the indoor temperature Ta does not exceed the allowable range $\Delta Tm$ in the next operation to avoid the excessive preliminary operation, with the result that the excessive power consumption may be reduced.
Moreover, the air-conditioning apparatus control module 201 controls the indoor temperature Ta to be within the allowable range $\Delta Tm$ to maintain the comfortableness, and at the same time, sets the value on the boundary of the allowable range $\Delta Tm$ as the control target to avoid the excessive preliminary operation, with the result that the excessive power consumption may be reduced.
Moreover, the air-conditioning apparatus control module 201 controls the timing to start the operation with reference to the value on the boundary of the allowable range $\Delta Tm$, with the result that the excessive preliminary operation may be avoided to reduce the excessive power consumption irrespective of a usage environment in a house.
Moreover, the air-conditioning apparatus control module 201 may determine the allowable range $\Delta Tm$ depending on the power saving level to adjust a balance between an energy saving property and the comfortableness, with the result that convenience of the user may be improved.
Moreover, when the air-conditioning apparatus control module 201 assumes that a person enters the indoor space 171 of the house 91 at the designated time, the air-conditioning apparatus 101 is to operate within the allowable range $\Delta Tm$ while performing a preliminary operation when the user enters the room. Therefore, even when the person enters a room subjected to the preliminary operation in the house from outside the house, the air-conditioning apparatus control module 201 may avoid the excessive preliminary operation to reduce the excessive power consumption while improving the comfortableness.
Moreover, the air-conditioning apparatus control module 201 takes into consideration the temperature of the outside air and the indoor temperature Ta to determine the allowable range $\Delta Tm$, with the result that minimum required preliminary operation may be performed while ensuring the comfortableness.
Moreover, the air-conditioning apparatus control module 201 takes into consideration the temperature of the outside air and the target temperature Tm to determine the allowable range $\Delta$Tm, with the result that the excessive preliminary operation may be avoided while improving the comfortableness.

Moreover, when the air-conditioning apparatus control module 201 assumes that a person enters the indoor space 171 subjected to the preliminary operation from another indoor space 171 in the house 91 at the designated time, the air-conditioning apparatus 101 is to operate within the allowable range $\Delta$Tm while performing the preliminary operation when the user enters the room. Therefore, even when the person enters the room subjected to the preliminary operation in the house from another room in the house, the air-conditioning apparatus control module 201 may avoid the excessive preliminary operation to reduce the excessive power consumption while maintaining the comfortableness.

Moreover, the air-conditioning apparatus control module 201 determines the allowable range $\Delta$Tm based on the temperature difference between the indoor temperatures Ta felt by the person, with the result that the excessive power consumption may be reduced while performing the control in a state in which the target temperature Tm as an item to be controlled is concealed.

Moreover, the air-conditioning apparatus control module 201 may reduce the excessive power consumption while performing the control in the state in which the indoor temperature Ta of the room subjected to the preliminary operation, which is an item to be controlled, is concealed.

Moreover, the air-conditioning apparatus control module 201 controls the target temperature Tm as an integer value, with the result that preliminary operation control may be performed not by providing a complicated computation configuration such as floating-point arithmetic, but only by providing a simple computation configuration. When the air-conditioning apparatus 101 is controlled from an external control device such as the HEMS controller 323, which is described later with reference to Fig. 19, there are recommended standard interface standards such as ECHONET Lite (trademark), which enable operations such as turning off of the operation, a change to the operation mode, and a change to a set temperature in common on the air-conditioning apparatus 101 of any manufacturer. In such a standard interface, the change to the set temperature is made in steps of 1 degree C, and hence a set temperature for the energy saving control may be set to the integer value to apply the above-mentioned energy saving control to the air-conditioning apparatus 101 of any manufacturer, with the result that universality may be improved.

Stated differently, the air-conditioning apparatus control module 201 may reduce the excessive power consumption while maintaining the comfortableness particularly significantly.

As described above, in Embodiment 1 of the present invention, there is configured the air-conditioning apparatus control module 201 configured to perform the preliminary operation in which the air-conditioning apparatus 101 is operated before the designated time to adjust the room temperature, the air-conditioning apparatus control module 201 including the operation time correction unit 1 configured to correct the operation time of the air-conditioning apparatus 101, in which the operation time correction unit 1 computes the preliminary operation time of the air-conditioning apparatus 101 depending on the first temperature difference between the room temperature and the target temperature, corrects next operation time, being a time duration of operation of the next time, based on the second temperature difference between the room temperature and a first temperature that is higher than the target temperature by the predetermined temperature at the designated time when the air-conditioning apparatus 101 is in the cooling operation, and corrects next operation time based on the third temperature difference between the room temperature and the second temperature that is lower than the target temperature by the predetermined temperature at the designated time when the air-conditioning apparatus 101 is in the heating operation.

Moreover, in Embodiment 1 of the present invention, the operation time correction unit 1 includes the representative time correction unit 13 configured to correct the representative time, which is the operation time required for the indoor temperature in the room to be air-conditioned by the air-conditioning apparatus 101 to change by a unit temperature, and the time-related computation unit 15 configured to compute the operation start time of the air-conditioning apparatus 101 based on the representative time, in which the time-related computation unit 15 supplies the next operation start time, which is determined based on a temperature difference between an arbitrary indoor temperature after the stop of a preliminary operation performed past and before the preliminary operation performed next (next preliminary operation) and a designated temperature at the designated time in the next preliminary operation, and on the next representative time, to the air-conditioning apparatus 101.

Moreover, in Embodiment 1 of the present invention, the operation time correction unit 1 determines the adjustment ratio based on the indoor temperature corresponding to the designated time in the preliminary operation performed past and the allowable range of the designated temperature at the designated time in the preliminary operation performed past, and determines the operation time based on the adjustment ratio and past operation time.

In the above-mentioned configuration, the air-conditioning apparatus control module 201 may control the preliminary operation based on a temperature width allowable by the user to balance between the reduction in amount of power consumption and the improvement of the comfortableness.

Moreover, in Embodiment 1 of the present invention, in the case of referring to the history of heating operations of the air-conditioning apparatus 101 and determining that the designated temperature is lower than the allowable range $\Delta$Tm, or in the case of referring to the history of cooling operations of the air-conditioning apparatus 101 and determining that the designated temperature is higher than the allowable range $\Delta Tm$, the operation time correction unit 1 sets the next operation start time to be earlier.

In the above-mentioned configuration, when the indoor temperature Ta is not within the allowable range $\Delta Tm$, the air-conditioning apparatus control module 201 starts the operation earlier so that the indoor temperature Ta falls within the allowable range $\Delta Tm$ in the next operation, with the result that the comfortableness may be maintained.

Moreover, in Embodiment 1 of the present invention, in the case of referring to the history of heating operations of the air-conditioning apparatus 101 and determining that the designated temperature is higher than the allowable range $\Delta Tm$, or in the case of referring to the history of cooling operations of the air-conditioning apparatus 101 and determining that the designated temperature is lower than the allowable range $\Delta Tm$, the operation time correction unit 1 delays the next operation start time.

In the above-mentioned configuration, when the indoor temperature Ta has already exceeded the allowable range $\Delta Tm$, the air-conditioning apparatus control module 201 starts the operation later so that the indoor temperature Ta does not exceed the allowable range $\Delta Tm$ in the next operation to avoid the excessive preliminary operation, with the result that the excessive power consumption may be reduced.

Moreover, in Embodiment 1 of the present invention, in the case of referring to the history of heating operations of the air-conditioning apparatus 101, the operation time correction unit 1 corrects the next operation start time based on a result of comparison between the designated temperature and the minimum value in the allowable range $\Delta Tm$, and in the case of referring to the history of cooling operations of the air-conditioning apparatus 101, the operation time correction unit 1 corrects the next operation start time based on a result of comparison between the designated temperature and the maximum value in the allowable range $\Delta Tm$.

In the above-mentioned configuration, the air-conditioning apparatus control module 201 controls the indoor temperature Ta to within the allowable range $\Delta Tm$ to maintain the comfortableness, and at the same time, sets the value on the boundary of the allowable range $\Delta Tm$ as the control target to avoid the excessive preliminary operation, with the result that the excessive power consumption may be reduced.

Moreover, in Embodiment 1 of the present invention, in the case of referring to the history of heating operations of the air-conditioning apparatus 101 and determining that the designated temperature is higher than the minimum value of the allowable range $\Delta Tm$, or in the case of referring to the history of cooling operations of the air-conditioning apparatus 101 and determining that the designated temperature is lower than the maximum value of the allowable range $\Delta Tm$, the operation time correction unit 1 delays the next operation start time.

In the above-mentioned configuration, the air-conditioning apparatus control module 201 controls the timing to start the operation with reference to the value on the boundary of the allowable range $\Delta Tm$, with the result that the excessive preliminary operation may be avoided to reduce the excessive power consumption irrespective of the usage environment in the house.

Moreover, in Embodiment 1 of the present invention, the plurality of power saving levels different in power consumption are provided, the plurality of power saving levels and an allowable range width that determines the allowable range $\Delta Tm$ are linked, and when a particular power saving level is selected from among the plurality of power saving levels, the operation time correction unit 1 determines the allowable range width and hence the allowable range $\Delta Tm$ depending on the particular power saving level.

In the above-mentioned configuration, the air-conditioning apparatus control module 201 may determine the allowable range $\Delta Tm$ depending on the power saving level to adjust the balance between the energy saving property and the comfortableness, with the result that the convenience of the user may be improved.

Moreover, in Embodiment 1 of the present invention, in the case of estimating that a person moves from outside the house to the room subjected to the preliminary operation by the designated time, the operation time correction unit 1 determines the allowable range $\Delta Tm$.

In the above-mentioned configuration, when the air-conditioning apparatus control module 201 assumes that the person enters the indoor space 171 of the house 91 at the designated time, the air-conditioning apparatus 101 is to operate within the allowable range $\Delta Tm$ while performing the preliminary operation when the user enters the room. Therefore, even when the person enters the room subjected to the preliminary operation in the house from outside the house, the air-conditioning apparatus control module 201 may avoid the excessive preliminary operation to reduce the excessive power consumption while improving the comfortableness.

Moreover, in Embodiment 1 of the present invention, the operation time correction unit 1 determines the allowable range $\Delta Tm$ depending on the temperature difference between the temperature of the outside air and the indoor temperature Ta in the room subjected to the preliminary operation.

In the above-mentioned configuration, the air-conditioning apparatus control module 201 takes into consideration the temperature of the outside air and the indoor temperature Ta to determine the allowable range $\Delta Tm$, with the result that the minimum required preliminary operation may be performed while ensuring the comfortableness.

Moreover, in Embodiment 1 of the present invention, the operation time correction unit 1 determines the allowable range $\Delta Tm$ depending on the temperature difference between the temperature of the outside air and the target temperature Tm in the room subjected to the preliminary operation.

In the above-mentioned configuration, the air-conditioning apparatus control module 201 takes into consideration the temperature of the outside air and the target temperature Tm to determine the allowable range ΔTm, with the result that the excessive preliminary operation may be avoided while ensuring the comfortableness.

Moreover, in Embodiment 1 of the present invention, in the case of estimating that the person moves from inside the house to the room subjected to the preliminary operation by the designated time, the operation time correction unit 1 determines the allowable range ΔTm.

In the above-mentioned configuration, when the air-conditioning apparatus control module 201 assumes that the person enters the indoor space 171 subjected to the preliminary operation from another indoor space 171 of the house 91 at the designated time, the air-conditioning apparatus 101 is to operate within the allowable range ΔTm while performing the preliminary operation when the user enters the room. Therefore, even when the person enters the room subjected to the preliminary operation in the house from another room in the house, the air-conditioning apparatus control module 201 may avoid the excessive preliminary operation to reduce the excessive power consumption while maintaining the comfortableness, and at the same time, may reflect an action such as entering and exiting the room of the user on the control. Therefore, the air-conditioning apparatus control module 201 may balance between the reduction in power consumption and the improvement of the comfortableness.

Moreover, in Embodiment 1 of the present invention, the operation time correction unit 1 determines the allowable range ΔTm depending on the temperature difference between the indoor temperature Ta of the room in which the person has stayed before the designated time and the indoor temperature Ta of the room subjected to the preliminary operation.

In the above-mentioned configuration, the air-conditioning apparatus control module 201 determines the allowable range ΔTm based on the temperature difference between the indoor temperatures Ta felt by the person, with the result that the excessive power consumption may be reduced while performing the control in the state in which the target temperature Tm as the item to be controlled is concealed.

Moreover, in Embodiment 1 of the present invention, the operation time correction unit 1 determines the allowable range ΔTm depending on the temperature difference between the indoor temperature Ta of the room the person has stayed before the designated time and the target temperature Tm of the room subjected to the preliminary operation.

In the above-mentioned configuration, the air-conditioning apparatus control module 201 may reduce the excessive power consumption while performing the control in the state in which the indoor temperature Ta of the room subjected to the preliminary operation, which is the item to be controlled, is concealed.

Moreover, in Embodiment 1 of the present invention, the operation time correction unit 1 sets the target temperature Tm to the integer value.

In the above-mentioned configuration, the air-conditioning apparatus control module 201 may perform the preliminary operation control without performing the complicated computation such as the floating-point arithmetic. Moreover, the preliminary operation control may be performed universally on the air-conditioning apparatus 101 of any manufacturer.

From the above description, the air-conditioning apparatus control module 201 may reduce the excessive power consumption while maintaining the comfortableness particularly significantly.


Embodiment 2.

A difference from Embodiment 1 resides in that the infrared sensor 143 is provided to the indoor unit 113.


(Configuration in Embodiment 2)


(Use of infrared sensor 143)


Fig. 14 is a diagram illustrating an example of an air-conditioning apparatus 101 according to Embodiment 2 of the present invention. As illustrated in Fig. 14, the infrared sensor 143 is provided to the indoor unit 113, and the human presence sensor 144 is provided in the indoor space 171. The infrared sensor 143 detects radiant energy of an object, such as the radiation temperature. Therefore, the infrared sensor 143 may detect a temperature of a structural member that is present in the indoor space 171. Therefore, the detection result of the infrared sensor 143 may be used as the indoor temperature Ta, which is one of various parameters used for the control of the air-conditioning apparatus 101.

As with the infrared sensor 143, the human presence sensor 144 detects the radiant energy of the object, such as the radiation temperature, to detect presence or absence of a person in the indoor space 171 as controlled space. For example, the human presence sensor 144 only needs to be able to detect an infrared ray, detect an ultrasonic wave, or detect visible light depending on tuning or its configuration. Therefore, the detection result of the human presence sensor 144 may be used as one of the various parameters used for the control of the air-conditioning apparatus 101.

(Effects of Embodiment 2)

From the above description, the air-conditioning apparatus control module 201 may detect the temperature of the structural member with the infrared sensor 143 to perform the timer control so that the temperature of the structural member becomes the target temperature Tm. Therefore, the air-conditioning apparatus control module 201 may realize an operation with higher comfortableness.

More specifically, when the timer control is performed, it is assumed that heat required to cool or heat the structural member of the indoor unit 113 provided in the indoor space 171 to the target temperature Tm is larger than a heat load resulting from thermal intrusion from the outside. Therefore, in order for the air-conditioning apparatus control module 201 to appropriately perform the energy saving control, it is important for the air-conditioning apparatus control module 201 to determine whether or not an amount of heat of the structural member is successfully treated.

For example, the air-conditioning apparatus control module 201 assumes a case where the indoor temperature Ta is used as a determination criterion. In this case, the indoor temperature Ta has a smaller heat capacity than the structural member, and hence a result of a response of the air-conditioning apparatus 101 appears earlier. Therefore, even when the structural member still has a high temperature or a low temperature, there is a fear that the air-conditioning apparatus control module 201 may determine that the indoor space 171 is sufficiently cooled or heated. To address this problem, when the air-conditioning apparatus control module 201 determines the allowable range ΔTm by detecting the temperature of the structural member with the infrared sensor 143 and setting a temperature computed based on the temperature of the structural member to the indoor temperature Ta, the above-mentioned situation may be avoided, and hence the operation with the higher comfortableness may be realized.

As described above, in Embodiment 2 of the present invention, the infrared sensor 143 configured to detect the temperature of the structural member of the indoor unit 113 is provided to the indoor unit 113, and the operation time correction unit 1 sets the temperature computed based on the temperature of the structural member to the indoor temperature Ta.

In the above-mentioned configuration, the air-conditioning apparatus control module 201 may perform the timer control so that the temperature of the structural member becomes the target temperature Tm by detecting the temperature of the structural member with the infrared sensor 143. Therefore, the air-conditioning apparatus control module 201 may realize the operation with the higher comfortableness.

Embodiment 3.

A difference from Embodiment 1 and Embodiment 2 resides in that limitations are put on the target temperature Tm.

(Configuration in Embodiment 3)

(Limitations on target temperature)

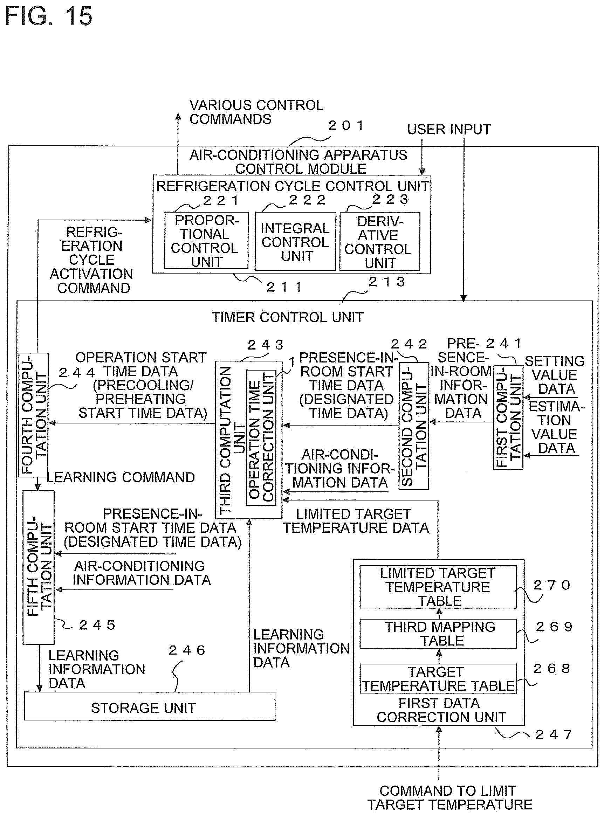

Fig. 15 is a diagram illustrating an example of a functional configuration of an air-conditioning apparatus control module 201 according to Embodiment 3 of the present invention. Fig. 15 is different from the air-conditioning apparatus control module 201 illustrated in Fig. 9 in that a first data correction unit 247 is added, for example. More specifically, the first data correction unit 247 includes a target temperature table 268, a third mapping table 269, and a limited target temperature table 270, and in the third mapping table 269, a mapping relationship for linking the target temperature table 268 and the limited target temperature table 270 is set. For example, when being supplied with a command to limit the target temperature, the timer control unit 213 uses the first data correction unit 247 to limit the target temperature Tm, and supplies the limited target temperature Tm as limited target temperature data to the third computation unit 243.

For example, it is assumed that the timer control unit 213 is supplied with the command to limit the target temperature. In this case, during the timer control, an upper limit or a lower limit of the target temperature Tm may be limited to a range that is narrower than a manipulatable range of the remote controller 115. For example, even when the target temperature Tm for cooling may be selected with the remote controller 115 in a range of from 16 degrees C to 30 degrees C, the target temperature Tm for the timer control is limited to from 25 degrees C to 28 degrees C. Moreover, for example, even when the target temperature Tm for heating may be selected with the remote controller 115 in a range of from 16 degrees C to 30 degrees C, the target temperature Tm for the timer control is limited to from 19 degrees C to 22 degrees C.

(Effects of Embodiment 3)

From the above description, the air-conditioning apparatus control module 201 limits the range of the target temperature Tm to avoid overcooling with cooling or overheating with heating, with the result that the energy saving property may be improved while preventing a situation in which health is damaged with hotness, coldness, or the like.

More specifically, when a person in a state of being unable to operate the remote controller 115, such as a sleeping person or a small child, is present in the indoor space 171, when the timer control works automatically, there is a fear that the health may be damaged due to hotness, coldness, or the like. To address this problem, the air-conditioning apparatus control module 201 may limit the range of the target temperature Tm to perform the control with the allowable range ∆Tm set based on the limited target temperature Tm. Therefore, the air-conditioning apparatus control module 201 may improve the energy saving property without supplying excessively conditioned air to the indoor space 171.

As described above, in Embodiment 3 of the present invention, the first data correction unit 247 configured to correct the target temperature Tm is further included, and the first data correction unit 247 includes the target temperature table 268 in which the target temperatures Tm are set, the limited target temperature table 270 in which limited target temperatures of the target temperatures Tm are set, and the third mapping table 269 for linking the target temperatures Tm set in the target temperature table 268 to the limited target temperatures set in the limited target temperature table 270. The first data correction unit 247 converts, in the case of being supplied with the command to limit the target temperature Tm, the target temperature Tm to the limited target temperature based on the target temperature table 268, the limited target temperature table 270, and the third mapping table 269, and supplies the limited target temperature to the operation time correction unit 1.

In the above-mentioned configuration, the air-conditioning apparatus control module 201 may avoid the state in which the indoor space 171 is excessively cooled or heated, and at the same time, may improve the energy saving property.

Embodiment 4.

A difference from Embodiment 1 to Embodiment 3 resides in that limitations are put on a usage current.

(Configuration in Embodiment 4)

(Limitations on current)

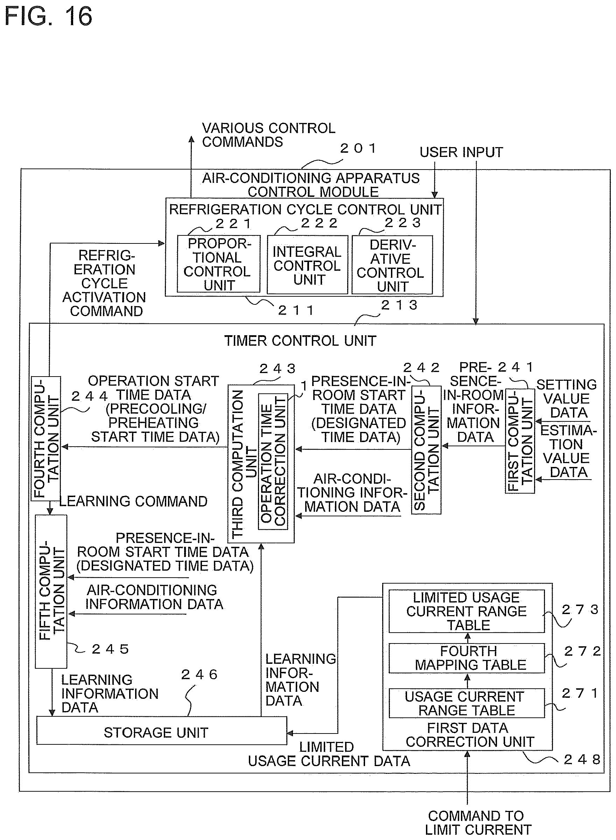

Fig. 16 is a diagram illustrating an example of a functional configuration of an air-conditioning apparatus control module 201 according to Embodiment 4 of the present invention. Fig. 16 is different from the air-conditioning apparatus control module 201 illustrated in Fig. 9 in that a second data correction unit 248 is added, and in that the timer control unit 213 is supplied with a command to limit the current, for example. The second data correction unit 248 includes a usage current range table 271, a fourth mapping table 272, and a limited usage current range table 273, and in the fourth mapping table 272, a mapping relationship for linking the usage current range table 271 and the limited usage current range table 273 is set. When being supplied with the command to limit the current, the timer control unit 213 uses the second data correction unit 248 to put the limitations on the usage current.

For example, it is assumed that the timer control unit 213 is supplied with the command to limit the current. In this case, in performing the energy saving control, current limitation values may be set in a plurality of stages. Moreover, for example, when the power saving mode is set to the air-conditioning apparatus 101 or the HEMS controller 323, which is to be described later, and the command to limit the current is supplied to the timer control unit 213, the current limitation value may be set.

For example, in a breakdown of power consumption of the air-conditioning apparatus 101, the compressor 121 occupies from about 80% to about 90%, the indoor fan 133 occupies from about 5% to about 10%, and the outdoor fan 131 occupies from about 5% to about 10%. Therefore, in the case of limiting the current of the air-conditioning apparatus 101, the air-conditioning apparatus control module 201 needs to reduce the rotation speed of the compressor 121 to reduce the operation capacity, or reduce the rotation speed of the indoor fan 133 or the outdoor fan 131 to reduce the air volume.

In order to limit the current, when no limitation on the current is 100%, the current limitation value may be set in such a relative value (%) as a current limitation value of 70%, or a current limitation value may be set specifically in such an absolute value (A) as 3 A (amperes), for example.

For example, it is assumed that the power saving mode is set in the air-conditioning apparatus 101 or the HEMS controller 323, which is to be described later. In this case, for example, when the current limitation value is 70%, the air-conditioning apparatus control module 201 only needs to limit an upper limit rotation speed of the compressor 121 to 70% of the maximum rotation speed, or limit the rotation speed of the indoor fan 133 or the outdoor fan 131 to 70% of the maximum rotation speed.

On the other hand, for example, when the current limitation value is 3 A, and an operation current when there is no limitation on the current is 5 A, the air-conditioning apparatus control module 201 only needs to limit the upper limit rotation speed of the compressor 121 to 3/5 of the maximum rotation speed, or limit the rotation speed of the indoor fan 133 or the outdoor fan 131 to 3/5 of the maximum rotation speed. Note that, in general, the operation current when there is no limitation on the current is clearly specified for each model.

In the above description, the case where the reference with no limitation on the current (100%) is a maximum value of a compressor rotation speed or a maximum value of a fan rotation speed has been described, but the present invention is not particularly limited thereto. For example, the limitations may be set with reference to a compressor rotation speed or a fan rotation speed during a normal operation in normal control. For example, when the compressor rotation speed is to be 50 rps (rotation per second) in the normal control when there is no limitation on the current, the compressor rotation speed only needs to be set to 35 rps when the current limitation value is 70%. On the other hand, when a rotation speed of the indoor fan 133 is to be 1,000 rpm (rotation per minute) in strong-wind setting in the normal control with no limitation on the current, the rotation speed needs to be set to 700 rpm when the current limitation value is 70%.

(Effects of Embodiment 4)

From the above description, the air-conditioning apparatus control module 201 sets the current limitation value so that the user's inclination toward energy saving may be reflected on the control, with the result that the power consumption may be suppressed in line with the user's intention to improve the energy saving property, and at the same time, the comfortableness may be maintained.

For example, the air-conditioning apparatus control module 201 only needs to advance the operation start time in compensation for the limitation on the current to control the indoor temperature Ta to within the allowable range $\Delta$Tm at the designated time. As a result, the air-conditioning apparatus control module 201 may control the indoor temperature Ta to within the allowable range $\Delta$Tm by the designated time while improving the energy saving property, with the result that the comfortableness may be maintained.

As described above, in Embodiment 4 of the present invention, the second data correction unit 248 configured to determine limited usage current data linked with at least one of the plurality of power saving levels is further included, and the second data correction unit 248 includes the usage current range table 271 in which usage current ranges are set, the limited usage current range table 273 in which limited usage current ranges of the usage current ranges are set, and the fourth mapping table 272 for linking the usage current ranges set in the usage current range table 271 to the limited usage current ranges set in the limited usage current range table 273. The second data correction unit 248 converts, in the case of being supplied with the command to limit the usage current range, the usage current range to the limited usage current range based on the usage current range table 271, the limited usage current range table 273, and the fourth mapping table 272, and links the limited usage current range to at least one of the plurality of power saving levels.

In the above-mentioned configuration, the air-conditioning apparatus control module 201 puts the limitations on the usage current, and at the same time, performs the preliminary operation in the allowable range $\Delta$Tm, with the result that the comfortableness may be maintained while improving the energy saving property.

Embodiment 5.

A difference from Embodiment 1 to Embodiment 4 resides in that a notification of an automatic operation is provided.

(Configuration in Embodiment 5)

(Notification of automatic operation)

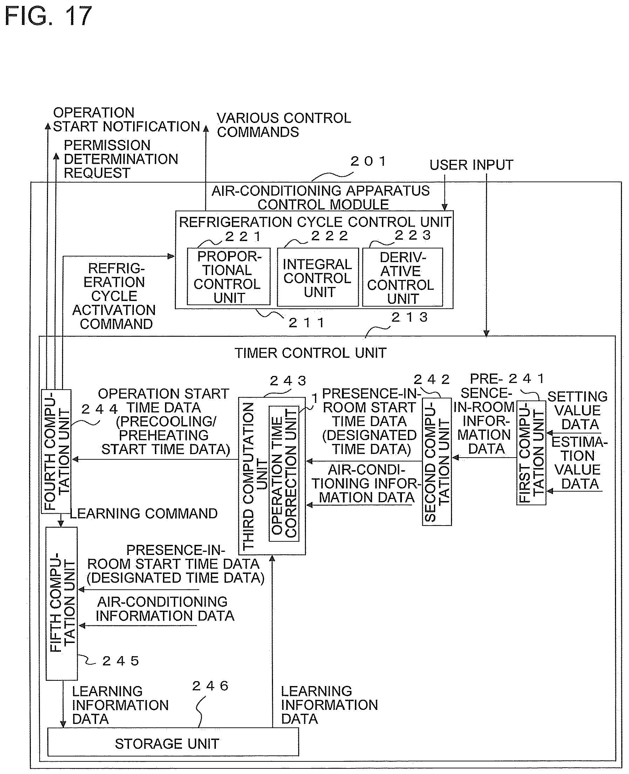

Fig. 17 is a diagram illustrating an example of a functional configuration of an air-conditioning apparatus control module 201 according to Embodiment 5 of the present invention. Fig. 17 is different from the air-conditioning apparatus control module 201 illustrated in Fig. 9 in that a permission determination request or an operation start notification is supplied from the fourth computation unit 244 of the timer control unit 213 to the outside.

For example, a case where the permission determination request of the timer control is transmitted to the user, or the operation start notification of the timer control is transmitted to the user is assumed. For example, the air-conditioning apparatus control module 201 transmits the permission determination request to the communication device 328, which is to be described later, such as a cellular phone, a smartphone, a personal computer, or a car navigator owned by the user via a public line 327, which is to be described later, to prompt the user to press a button to permit the start of the operation, or transmits an e-mail or the like to notify the user of the start of the operation.

(Effects of Embodiment 5)

From the above description, the air-conditioning apparatus control module 201 may perform the operation to ask for the user's confirmation before the operation of the refrigeration cycle to make the user confirm the air-conditioning information of the air-conditioning apparatus 101, with the result that safety of the air-conditioning apparatus 101 may be improved. Moreover, even when it is assumed that the time at which the user comes home is changed, the air-conditioning apparatus control module 201 performs the operation of asking for the user's confirmation before the operation of the refrigeration cycle, with the result that an unnecessary operation may also be avoided. Therefore, the air-conditioning apparatus control module 201 may avoid wasteful power consumption, and hence may improve the energy saving property.

As described above, in Embodiment 5 of the present invention, the fourth computation unit 244 for supplying the operation start notification or the permission determination request to the outside is further included, and the fourth computation unit 244 supplies the operation start notification or the permission determination request to the outside before the next operation start time arrives.

In the above-mentioned configuration, the air-conditioning apparatus control module 201 performs the operation to ask for the user's confirmation before the operation of the refrigeration cycle, with the result that the safety of the air-conditioning apparatus 101 is improved, and at the same time, the unnecessary operation is avoided to avoid the wasteful power consumption, with the result that the energy saving property may be improved.

Embodiment 6.

A difference from Embodiment 1 to Embodiment 5 resides in that an operation when the user does not come home is defined.

(Configuration in Embodiment 6)

(Case where user does not come home)

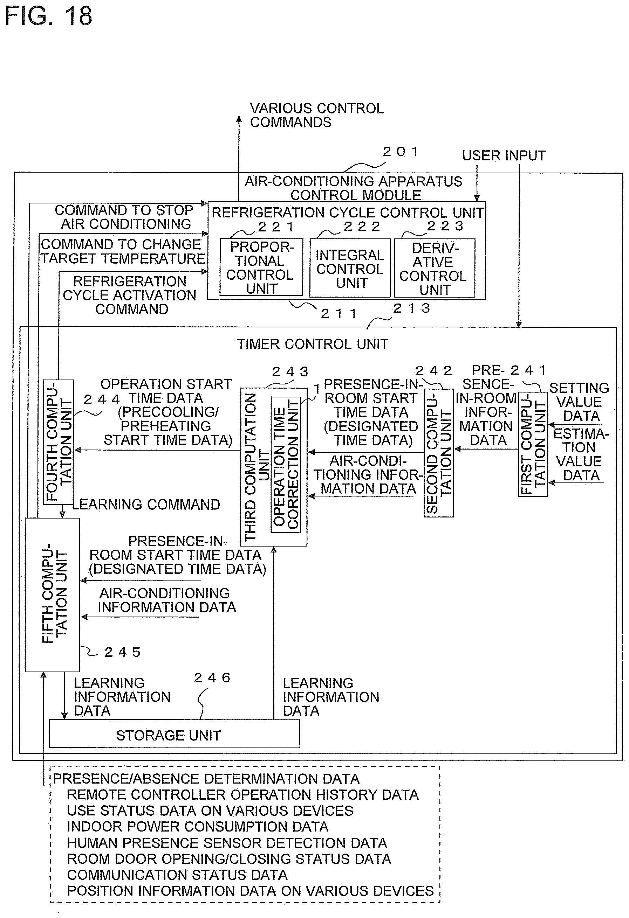

Fig. 18 is a diagram illustrating an example of a functional configuration of an air-conditioning apparatus control module 201 according to Embodiment 6 of the present invention. As illustrated in Fig. 18, the fifth computation unit 245 is supplied with at least one of remote controller operation history data, use status data on various devices, indoor power consumption data, human presence sensor detection data, room door opening/closing status data, communication status data, and position information data on the various devices, for example, as presence/absence determination data.

Next, the above-mentioned configuration is specifically described. An example in which, in the case of performing the timer control, control details are changed depending on a result of determining presence or absence of a person is described with reference to Fig. 18. Fig. 18 is different from the air-conditioning apparatus control module 201 illustrated in Fig. 9 in that the presence/absence determination data, which is data on presence or absence of a person, is supplied to the fifth computation unit 245 of the timer control unit 213, and in that an instruction to stop air conditioning or a command to change the target temperature is supplied from the fifth computation unit 245 of the timer control unit 213 to the air-conditioning apparatus 101 via the refrigeration cycle control unit 211.

As illustrated in Fig. 18, for example, a case in which the presence/absence determination data is received while executing the timer control is assumed. For example, when the presence of the user in the room, that is, coming home of the user is not detected even when preset time has elapsed after the operation of the timer control is started, the air-conditioning apparatus control module 201 changes the target temperature Tm or stops the air-conditioning apparatus 101.

Here, to detect the presence of the user in the room, the detection result of the infrared sensor 143 or the human presence sensor 144 described above may be used. Alternatively, to detect the presence of the user in the room, an input operation on the remote controller 115 may be used. Still alternatively, to detect the presence of the user in the room, as described above, operation histories of various electrical appliances may be collected by the HEMS controller 323, which is to be described later, and the presence-in-room information may be determined based on a result of the collection. Yet alternatively, to detect the presence of the user in the room, the power consumption, an accumulated amount of power consumption, the opening/closing information of the room door (not shown), position information on the user, an image pickup result of a camera provided to an interphone (not shown), or the like may be used.

Moreover, when the target temperature Tm is changed, the target temperature Tm may be determined to be a particular temperature in a fixed manner. Alternatively, when the target temperature Tm is changed, the target temperature Tm may be set to a relative value with respect to the original target temperature Tm, for example, a value that is 2 degrees C higher than the target temperature Tm for cooling, or a value that is 2 degrees C lower than the target temperature Tm for heating.

(Effects of Embodiment 6)

From the above description, when the presence of the user in the room, that is, coming home of the user is not detected even when the preset time has elapsed after the operation of the timer control is started, the air-conditioning apparatus control module 201 stops the air-conditioning apparatus 101 or changes the target temperature Tm of the air-conditioning apparatus 101. As a result, even when the time at which the user comes home is later than scheduled due to a sudden errand, the air-conditioning apparatus control module 201 may avoid a wasteful operation when the user is absent, with the result that the amount of power consumption of the air-conditioning apparatus 101 may be reduced.

As described above, in Embodiment 6 of the present invention, the fifth computation unit 245 configured to supply the command to stop air conditioning or the command to change the target temperature Tm depending on the result of determining presence or absence of a person is further included, and while performing the preliminary operation and when the presence of the person is not detected by the designated time, the fifth computation unit 245 supplies the command to stop air conditioning or the command to change the target temperature Tm.

In the above-mentioned configuration, the air-conditioning apparatus control module 201 may supply the command to stop air conditioning or the command to change the target temperature Tm when the user is absent to avoid the wasteful operation when the user is absent, with the result that the amount of power consumption of the air-conditioning apparatus 101 may be reduced.

Embodiment 7.

A difference from Embodiment 1 to Embodiment 6 resides in that the HEMS 2 is used to control the indoor unit 113.

(Configuration in Embodiment 7)

Fig. 19 is a diagram illustrating an example of a schematic configuration of the HEMS 2 according to Embodiment 7 of the present invention. The air-conditioning apparatus control module 201 is controlled with the use of information of the HEMS 2 to automatically adjust the balance between the comfortableness and the energy saving property and improve the convenience of the user. First, the HEMS 2 is described.

(Configuration of HEMS 2)

As illustrated in Fig. 19, the HEMS 2 is provided, in the house 91 illustrated in Fig. 8, with various devices such as electrical appliances, which are home electrical appliances such as the indoor unit 113 of the air-conditioning apparatus 101, the terminal 329, an IH cooking heater 331, a range grill 333, and a lighting appliance 335. The HEMS 2 is also provided, outside the house 91 illustrated in Fig. 8, with the various devices such as electrical appliances such as an electric car 311 equipped with a battery 341, a power conditioner 313, a solar cell array 315, a power distribution panel 319, and a power meter 321. The electrical appliances are connected to one another via a power line 351. Moreover, of the electrical appliances, the home electrical appliances are driven by electric power supplied from an electric power company 317, electric power supplied from the solar cell array 315, or electric power supplied from the battery 341 equipped in the electric car 311, and the power consumption is measured by the power meter 321.

Of the electrical appliances, the home electrical appliances are connected to the HEMS controller 323 via a communication line 353, and hence the HEMS controller 323 may acquire operation information of the home electrical appliances or transmit control commands to the home electrical appliances. For example, the HEMS controller 323 may transmit an instruction to operate the air-conditioning apparatus 101, an instruction to stop the air-conditioning apparatus 101, an instruction to change the operation mode such as cooling, heating, air blowing, or dehumidifying of the air-conditioning apparatus 101, or an instruction obtained by the operation on the remote controller 115, such as an instruction to change the target temperature Tm, the allowable range ΔTm, the air volume, the wind direction, or the power saving level of the air-conditioning apparatus 101, to the air-conditioning apparatus 101. For example, the HEMS controller 323 also transmits and receives various signals to and from the air-conditioning apparatus control module 201, which controls the air-conditioning apparatus 101.

The HEMS controller 323 is also connected to the power conditioner 313 and the power meter 321 via the communication line 353, and hence may acquire electric power information of the power conditioner 313 and the power meter 321. The HEMS controller 323 is further connected to the communication unit 325, and the communication unit 325 is connected to a public line 327, with the result that various kinds of data may be transmitted and received to and from the outside. For example, the communication device 328 may communicate with the HEMS controller 323 via the public line 327. The communication device 328 is a device operated by the user, and is a cellular phone, a smartphone, a tablet, a personal computer, a car navigator, or other devices, for example.

Various kinds of communication within the system in which the HEMS 2 is configured may be wired or wireless, and the form of communication is not particularly limited. Moreover, the above-mentioned configuration of the HEMS 2 is merely an example, and the present invention is not particularly limited thereto.

(Presence-in-room information)

An example in which the first computation unit 241 uses HEMS information to determine the presence-in-room information is described. The presence-in-room information includes the time at which the user starts to stay in the room, the time span during which the user continues staying in the room, and the time at which the user leaves the room, for example. When the presence-in-room information is set by the user, the HEMS controller 323, the communication device 328, or the terminal 329 is used, for example.

When the presence-in-room information is obtained based on a value estimated from the HEMS information, usage information of the terminal 329, the IH cooking heater 331, the range grill 333, the lighting appliance 335, or a television receiver (not shown), that is, the operation histories of the various electrical appliances may be collected by the HEMS controller 323, and the presence-in-room information may be determined based on a result of the collection, for example.

The presence-in-room information may be determined by analyzing the amount of power consumption measured by the power meter 321. Moreover, when it is assumed that the user possesses the communication device 328, and that the communication device 328 is equipped with a function of detecting a current position, the presence-in-room information may be determined with the use of the position information of the user. Alternatively, when a camera is provided to the interphone (not shown), the image pickup result of the camera may be used to detect the coming home of the user. Note that, as the position information of the user, for example, on/off of wireless fidelity (trademark) (Wi-Fi) connection or global positioning system (GPS)-based position information may be used.

(Effects regarding presence-in-room information)

The operation of obtaining the presence-in-room information based on the value estimated from the HEMS information is effective when the presence-in-room information varies day to day. The activation time may be delayed for a day with a late presence-in-room start time to reduce the amount of power consumption, and the activation time may be advanced for a day with an early presence-in-room start time to improve the comfortableness.

(Movement information)

With the use of the presence-in-room information of the HEMS 2, it may be estimated whether the user comes home from the outside or moves to the room from another room. In this manner, the allowable range $\Delta Tm$ of the timer control is changed for the case where the user moves to the room from the outside and for the case where the user moves to the room from another room. For example, when the user comes home from the outside, the user feels comfortable when the indoor temperature Ta is closer to the target temperature Tm than to the temperature of the outside air, with the result that a high accuracy is not required, and the allowable range $\Delta Tm$ is set large. When the user moves from an air-conditioned room to the room under the timer control, the user feels uncomfortable even with a slight temperature difference, with the result that the high accuracy is required, and the allowable range $\Delta Tm$ is set small. Alternatively, the indoor temperature Ta as the target of the timer control and a temperature of a place in which the user is located may be compared to set the allowable range $\Delta Tm$ larger as the temperature difference becomes larger.

For example, when the user is located outside, the temperature of the outside air and the indoor temperature Ta as the target of the timer control are compared, and when the user is located in a room, the indoor temperature Ta of the room and the indoor temperature Ta as the target of the timer control are compared to determine the allowable range $\Delta Tm$. The temperature of the outside air is detected by the outdoor temperature sensor included in the outdoor unit 111, obtained by reading the temperature of the outside air from weather information obtained by the HEMS 2, or detected by a universal temperature sensor, which is placed outdoor. The indoor temperature Ta is detected by detecting the indoor temperature Ta by the air-conditioning apparatus 101 placed in each room, or by placing a universal temperature sensor in each room.

(Effects regarding movement information)

The temperature difference felt by the user accompanying the movement may be reflected on the allowable range $\Delta Tm$ of the timer control to automatically adjust the balance between the energy saving property and the comfortableness, with the result that the convenience of the user is improved.

(Remote operation)

An example in which the timer control on the air-conditioning apparatus 101 is executed remotely with the use of the communication device 328 is described. It is assumed that the user owns the communication device 328 such as a cellular phone, a smartphone, a tablet, a personal computer, or a car navigator. It is also assumed that the communication device 328 that is present indoors, that is, inside the house 91, or outdoors, that is, outside the house 91, has transmitted various kinds of data to the HEMS controller 323 via the public line 327.

In this case, the communication unit 325 receives the various kinds of data transmitted from the communication device 328, and supplies the received various kinds of data to the HEMS controller 323. Moreover, when replying to the various kinds of data as necessary, the HEMS controller 323 makes a reply to the communication device 328 via the communication unit 325.

Therefore, as when the HEMS controller 323 is operated directly by the user, various kinds of information possessed by the HEMS controller 323 may be acquired remotely, or various kinds of operation commands may be issued remotely. Therefore, operation commands may be transmitted from the communication device 328 to the home electrical appliances, the operation information of the home electrical appliances may be received by the communication device 328, or the electric power information of the power conditioner 313 or the power meter 321 may be received by the communication device 328.

For example, it is assumed that the communication device 328 is a smartphone. In this case, an instruction to operate the air-conditioning apparatus 101 and an instruction to stop the air-conditioning apparatus 101 may be issued from a screen of the communication device 328. Moreover, the operation mode such as the cooling operation, the heating operation, an air blowing operation, or a dehumidifying operation of the air-conditioning apparatus 101 may be selected from the screen of the communication device 328. Moreover, a command such as the operation on the remote controller 115 to change the target temperature Tm, the allowable range $\Delta$Tm, the air volume, the wind direction, or the power saving level of the air-conditioning apparatus 101 may be transmitted from the screen of the communication device 328.

Moreover, the operation modes such as on or off of the operation, cooling, heating, air blowing, and dehumidifying, as well as the air-conditioning information of the air-conditioning apparatus 101, such as the target temperature Tm, the allowable range $\Delta$Tm, the air volume, the wind direction, or the power saving level may be checked from the screen of the communication device 328. Moreover, the air-conditioning information such as an intake air temperature (indoor temperature Ta), an indoor humidity, or the temperature of the outside air, which is measured of the air-conditioning apparatus 101 may be displayed and checked from the screen of the communication device 328. For example, when the air-conditioning apparatus 101 is already in operation when the state of the air-conditioning apparatus 101 is checked, it may be assumed that the air-conditioning apparatus 101 is used by another member of the family or other people, and it may be determined that the remote operation should be stopped, or when the air-conditioning information is checked to determine that the indoor temperature Ta has exceeded 30 degrees C, it may be determined that cooling should be started remotely.

With the above-mentioned configuration of the HEMS 2 as a precondition, the air-conditioning apparatus 101 may be activated immediately from the communication device 328, the designated time (presence-in-room start time, time of coming home) of a timer may be designated from the communication device 328, or a command on the precooling/preheating start time may be issued from the communication device 328. When the designated time (presence-in-room start time, time of coming home) of the timer is changed after the precooling or preheating is started, a change to the learning information of the fifth computation unit 245 is avoided, or the allowable range $\Delta$Tm is changed.

(Effects regarding remote operation)

When the designated time of the timer is advanced suddenly away from home, the precooling/preheating time becomes shorter than scheduled, and the room temperature may not fall within the allowable range $\Delta$Tm at the designated time. In this case, the change to the learning information of the fifth computation unit 245 is avoided to appropriately perform the next and subsequent timer control, with the result that the energy saving and the comfortableness may be maintained. Alternatively, when the designated time of the timer is advanced suddenly away from home, the allowable range $\Delta$Tm may be widened to appropriately perform learning and appropriately perform the next and subsequent timer control, with the result that the energy saving and the comfortableness may be maintained.

From the above description, the air-conditioning apparatus control module 201 may make the determination on the presence or absence of a person based on various kinds of data, with the result that the determination on the presence or absence of a person may be made accurately. Therefore, the air-conditioning apparatus control module 201 controls the air-conditioning apparatus 101 depending on the accurate result of determining presence or absence of a person, with the result that the wasteful consumption of the electric power may be avoided, and hence that the energy saving property may be improved.

As described above, in Embodiment 7 of the present invention, the various devices are provided indoors, and the fifth computation unit 245 uses, as the result of determining presence or absence of a person, at least one of a history of operations on the remote controller of the air-conditioning apparatus 101, the use status data of the various devices, the indoor power consumption data, detection data of the human presence sensor 144 configured to detect the presence or absence of a person, the room door opening/closing status data, the communication status data, and the position information data of the various devices.

In the above-mentioned configuration, the air-conditioning apparatus control module 201 may control the air-conditioning apparatus 101 depending on the accurate result of determining presence or absence of a person to avoid the wasteful consumption of the electric power, with the result that the energy saving property may be improved.

Embodiment 8.

A difference from Embodiment 1 to Embodiment 7 resides in that a form of implementation of an air-conditioning apparatus control module 201 is described.

(Configuration in Embodiment 8)

Fig. 20 is a diagram illustrating an example of implementing various modules in various devices or the like via recording media 401 according to Embodiment 8 of the present invention. As illustrated in Fig. 20, the air-conditioning apparatus control module 201 is stored in a recording medium 401_1, the recording medium 401_1 is mounted in the air-conditioning apparatus 101, and the air-conditioning apparatus control module 201 is installed in the air-conditioning apparatus 101 to configure various functions of executing the various operations described above.

A HEMS control module 510 is stored in a recording medium 401_2, the recording medium 401_2 is mounted in the HEMS controller 323, and the HEMS control module 510 is installed in the HEMS controller 323 to configure various functions of executing the various operations described above.

A virtual HEMS module 551 and a virtual remote controller module 552 are stored in a recording medium 401_3, the recording medium 401_3 is mounted in the communication device 328, and the virtual HEMS module 551 and the virtual remote controller module 552 are installed in a storage unit 532_1 of the communication device 328 to configure various functions of executing the various operations described above.

Note that, when the recording media 401_1 to 401_3 are not particularly distinguished, the recording media 401_1 to 401_3 are referred to as recording media 401. Moreover, when the storage unit 532_1 described above and a storage unit 532_2 to be described later are not particularly distinguished, the storage unit 532_1 and the storage unit 532_2 are referred to as storage units 532.

It is assumed that the server device 411 includes the storage unit 532_2 such as a disk device, and that the air-conditioning apparatus control module 201, the HEMS control module 510, the virtual HEMS module 551, and the virtual remote controller module 552 are stored in the disk device or other devices. In this case, for example, the server device 411 superimposes the air-conditioning apparatus control module 201, the HEMS control module 510, the virtual HEMS module 551, and the virtual remote controller module 552 on carrier waves to be uploaded to the air-conditioning apparatus 101, the HEMS controller 323, and the communication device 328.

The air-conditioning apparatus 101, the HEMS controller 323, and the communication device 328 download and install the air-conditioning apparatus control module 201 and the HEMS control module 510 uploaded from the server device 411 to configure the various functions of executing the various operations described above.

Moreover, when attention is focused on a logical storage hierarchy of each of the storage units 532, after the various modules are installed, an operating system (OS) 421, an application interface (API) 422, the air-conditioning apparatus control module 201, the HEMS control module 510, the virtual HEMS module 551, and the virtual remote controller module 552 are configured. In other words, when the various functions described above are practiced in a sharing manner with the OS 421, or practiced with cooperation of the OS 421 and various applications, or in other such cases, as described above, only parts other than the OS 421 may be stored in media for distribution or downloaded.

Therefore, the various modules are installed from the recording media 401 or the server device 411. In other words, when various functions of a control unit are stored in the recording media 401, the various functions of the control unit are implemented via the recording media 401, and when the various functions of the control unit are transferred on the communication medium, the various functions of the control unit are implemented via the communication medium. Therefore, the various modules are installed from the recording media 401 or the server device 411.

Note that, each of the recording media 401 is a magnetic disk (including a flexible disk), an optical disc including a compact disk read-only memory (CD-ROM) and a digital versatile disk (DVD), a magneto-optical disk such as a magneto-optical disk (MO), a removable medium formed of a semiconductor memory or the like, or a computer-readable recording medium such as a hard disk.

(Effects of Embodiment 8)

From the above description, the operation time correction unit 1 is configured in the various devices, for example, the air-conditioning apparatus 101 via the recording medium 401_1 or the communication medium, for example, the public line 327. Therefore, the operation time correction unit 1 may be configured in a device that may communicate via the recording medium 401_1 or the communication medium.

As described above, in Embodiment 8 of the present invention, the operation time correction unit 1 is configured in the various devices via the recording medium 401 1 or the communication medium.

In the above-mentioned configuration, the air-conditioning apparatus control module 201 may be configured in the device that may communicate via the recording medium 401_1 or the communication medium.

Reference Signs List

1 operation time correction unit 2 HEMS 11 temperature difference computation unit 13 representative time correction unit 15 time-related computation unit 21 allowable range computation unit 23 indoor temperature-related processing unit 25 representative time adjustment unit 27 operation time computation unit 29 operation start time computation unit 31 designated time-corresponding indoor temperature computation unit 33 adjustment ratio computation unit 51, 55, 61, 65, 71, 75 first state 52, 56, 62, 66, 72, 76 representative time correction process 53, 57, 63, 67, 73, 77 operation time computation process 54, 58, 64, 68, 74, 78 second state 91 house 101 air-conditioning apparatus 111 outdoor unit 113 indoor unit

115 remote controller 117 refrigerant pipe 121 compressor 122 four-way valve 123 outdoor heat exchanger 124 expansion valve 125 indoor heat exchanger 131 outdoor fan 133 indoor fan 141 indoor temperature sensor 143 infrared sensor 144 human presence sensor

151, 153 measurement control device 163, 353 communication line

171 indoor space 172 outdoor space 201 air-conditioning apparatus control module 211 refrigeration cycle control unit 213 timer control unit

221 proportional control unit 222 integral control unit 223 derivative control unit 241 first computation unit 242 second computation unit 243 third computation unit 244 fourth computation unit 245 fifth computation unit

246, 532, 532_1, 532_2 storage unit 247 first data correction unit 248 second data correction unit 261 power saving level data table 262 first mapping table 263 allowable range width data table264 temperature difference data table 265 second mapping table 266 learning information data 267 representative time initial value data 268 target temperature table 269 third mapping table 270 limited target temperature table 271 usage current range table272 fourth mapping table 273 limited usage current range table 311 electric car 313 power conditioner 315 solar cell array 317 electric power company 319 power distribution panel 321 power meter 323 HEMS controller 325 communication unit327 public line 328 communication device 329 terminal 331 IH cooking heater 333 range grill 335 lighting appliance 341 battery 351 power line 401,401_1-401_3 recording media 411 server device 421 OS 422 API 510 HEMS control module 551 virtual HEMS module 552 virtual remote controller module

**Claims**

1. An air-conditioning controller (201), the air-conditioning controller (201) being configured to cause an air-conditioning apparatus (101) to perform a preliminary operation in which the air-conditioning apparatus (101) is operated before a designated time to adjust a room temperature, the air-conditioning controller (201) including an operation time correction unit (1) configured to correct operation time of the preliminary operation, the operation time being the duration of operation of the air-conditioning apparatus (101),
the operation time correction unit (1) being further configured to compute the operation time of the preliminary operation of the air-conditioning apparatus (101) depending on a first temperature difference, the first temperature difference being a difference between the room temperature Ta0, and a target temperature Tm, wherein the operation time correction unit (1) is further configured to correct, when the air-conditioning apparatus (101) is in a cooling operation, the computed operation time of the preliminary operation, which is the operation time of the operation of the air-conditioning apparatus (101) performed next, based on a second temperature difference, the second temperature difference being a difference between the room temperature Ta1 at the designated time and a first temperature that is higher than the target temperature by a predetermined temperature difference at the designated time, correct, when the air-conditioning apparatus (101) is in a heating operation, the computed operation time of the preliminary operation, which is the next operation time, based on a third temperature difference, the third temperature difference being a difference between the room temperature Ta1 at the designated time, and a second temperature that is lower than the target temperature by a predetermined temperature difference at the designated time, **char-**

**acterized in that**

the operation time correction unit (1) is further configured to determine an adjustment ratio based on an indoor temperature Ta1 corresponding to the designated time in a preliminary operation performed previously and an allowable range ΔTm at the designated time, in the preliminary operation performed previously, and

determine the operation time of the adjusted preliminary operation based on the determined adjustment ratio.

2. The air-conditioning controller (201) of claim 1,
wherein the operation time correction unit (1) includes

a representative time correction unit (13) configured to correct representative time, the representative time being the operation time required for the air-conditioning apparatus (101) to change an indoor temperature in a room by a unit temperature; and
a time-related computation unit (15) configured to compute an operation start time of the air-conditioning apparatus (101) based on the representative time, and

wherein the time-related computation unit (15) is configured to supply a next operation start time, which is determined based on a temperature difference between an arbitrary indoor temperature from after a preliminary operation performed past is stopped to before the preliminary operation of a next time is started and a designated temperature at the designated time in the next preliminary operation, and the representative time in the next preliminary operation, to the air-conditioning apparatus (101).

3. The air-conditioning controller (201) of claim 1 or 2, wherein the operation time correction unit (1) is configured to advance a next operation start time when referring to a history of heating operations of the air-conditioning apparatus (101) and determining that the indoor temperature at the designated time in the preliminary operation is lower than the allowable range at the designated time in the preliminary operation, or when referring to a history of cooling operations of the air-conditioning apparatus (101) and determining that the indoor temperature at the designated time in the preliminary operation is higher than the allowable range at the designated time in the preliminary operation .

4. The air-conditioning controller (201) of claim 1 or 2, wherein the operation time correction unit (1) is configured to delay a next operation start time when referring to a history of heating operations of the air-conditioning apparatus (101) and determining that the indoor temperature at the designated time in the preliminary operation performed next is higher than the allowable range at the designated time in the preliminary operation , or when referring to a history of cooling operations of the air-conditioning apparatus (101) and determining that the indoor temperature at the designated time in the preliminary operation is lower than the allowable range at the designated time in the preliminary operation.

5. The air-conditioning controller (201) of claim 1 or 2, wherein the operation time correction unit (1) is configured to correct a next operation start time depending, when referring to a history of heating operations of the air-conditioning apparatus (101), on a result of comparison between the indoor temperature at the designated time in the preliminary operation performed next and a minimum value in the allowable range; and
correct the next operation start time depending, when referring to a history of cooling operations of the air-conditioning apparatus (101), on a result of comparison between the indoor temperature at the designated time in the preliminary operation and a maximum value in the allowable range.

6. The air-conditioning controller (201) of any one of claims 3 to 5, wherein the operation time correction unit (1) is configured to delay a next operation start time when referring to a history of heating operations of the air-conditioning apparatus (101) and determining that the indoor temperature at the designated time in the preliminary operation is higher than the minimum value in the allowable range, or when referring to a history of cooling operations of the air-conditioning apparatus (101) and determining that the indoor temperature at the designated time in the preliminary operation is lower than the maximum value in the allowable range.

7. The air-conditioning controller (201) of any one of claims 3 to 6,
wherein a plurality of power saving levels that are different in power consumption are provided for selection,
wherein each of the plurality of power saving levels and an allowable range width for determining the allowable range at the designated time in the preliminary operation performed next are linked, and
wherein, the operation time correction unit (1) is configured to determine the allowable range width depending on a particular power saving level selected from among the plurality of power saving levels, and determines the allowable range at the designated time in the preliminary operation performed next.

8. The air-conditioning controller (201) of any one of claims 3 to 7, further comprising a person movement estimating unit (241) configured to estimate that a person moves from outside a house to the room subjected to the preliminary operation by the designated time,
wherein the operation time correction unit (1) is configured to determine the allowable range at the designated time in the preliminary operation performed next when the estimation is made by the person movement estimating unit (241).

9. The air-conditioning controller (201) of claim 8, wherein the operation time correction unit (1) is configured to determine the allowable range at the designated time in the preliminary operation performed next depending on a temperature difference between a temperature of outside air and the indoor temperature of the room subjected to the preliminary operation.

10. The air-conditioning controller (201) of claim 8, wherein the operation time correction unit (1) is configured to determine the allowable range at the designated time in the preliminary operation performed next depending on a temperature difference between a temperature of outside air and the target temperature of the room subjected to the preliminary operation.

11. The air-conditioning controller (201) of any one of claims 1 to 7, further comprising a person movement estimating unit (241) configured to estimate that a person moves from inside a house to the room subjected to the preliminary operation by the designated time,
wherein the operation time correction unit (1) configured to determine the allowable range at the designated time in the preliminary operation performed next when the estimation is made by the person movement estimating unit (241).

12. The air-conditioning controller (201) of any one of claims 1 to 11,
wherein the air-conditioning apparatus (101) includes an indoor unit (113) and an outdoor unit (111),
wherein the indoor unit (113) further includes an infrared sensor (143) configured to detect a temperature of a structural member of the indoor unit (113), and
wherein the operation time correction unit (1) is configured to receive from the indoor unit the temperature of the structural unit as detected by the infrared sensor, and to set a temperature computed from the temperature of the structural member as an indoor temperature.

13. The air-conditioning controller (201) of any one of claims 1 to 12, further comprising a communication-related computation unit (224) configured to supply an operation start notification or a permission determination request to an outside,
wherein the communication-related computation unit (224) is configured to supply the operation start notification or the permission determination request to the outside before a next operation start time arrives.

14. The air-conditioning apparatus air-conditioning controller (201) of any one of claims 1 to 13, further comprising a human presence sensor (144) configured to detect presence or absence of a person in a room subjected to the preliminary operation, and
a presence/absence-related computation unit (245) configured to supply a command to stop air conditioning or a command to change the target temperature depending on presence or absence of a person detected by the human presence sensor (144),
wherein, while the air-conditioning apparatus (101) performs the preliminary operation and when presence of the person is not detected by the human presence sensor (144) by the designated time, the presence/absence-related computation unit (245) is configured to supply the command to stop air conditioning or the command to change the target temperature.

## Patentansprüche

1. Klimaanlagensteuervorrichtung (201), wobei die Klimaanlagensteuervorrichtung (201) ausgelegt ist, um zu bewirken, dass eine Klimaanlagenvorrichtung (101) einen vorbereitenden Vorgang ausführt, bei dem die Klimaanlagenvorrichtung (101) vor einem festgelegten Zeitpunkt zur Einstellung einer Raumtemperatur betrieben wird, wobei die Klimaanlagensteuervorrichtung (201) eine Betriebszeitkorrektureinheit (1) umfasst, die ausgelegt ist, um die Betriebszeit des vorbereitenden Vorgangs zu korrigieren, wobei die Betriebszeit die Dauer des Betriebs der Klimaanlagenvorrichtung (101) ist,

wobei die Betriebszeitkorrektureinheit (1) ferner ausgelegt ist, um die Betriebszeit des vorbereitenden Vorgangs der Klimaanlagenvorrichtung (101) in Abhängigkeit von einer ersten Temperaturdifferenz zu berechnen, wobei die erste Temperaturdifferenz eine Differenz zwischen der Raumtemperatur Ta0 und einer Zieltemperatur Tm ist, wobei die Betriebszeitkorrektureinheit (1) ferner ausgelegt ist, um

wenn sich die Klimaanlagenvorrichtung (101) in einem Kühlvorgang befindet, die berechnete Betriebszeit des vorbereitenden Vorgangs zu korrigieren, welche die Betriebszeit des als nächstes durchgeführten Vorgangs der Klimaanlagenvorrichtung (101) ist, auf Grundlage einer zweiten Temperaturdifferenz, wobei die zweite Temperaturdifferenz eine Differenz zwischen der Raumtemperatur Ta1 zum festgelegten Zeitpunkt und einer ersten Temperatur ist, die um eine vorbestimmte Temperaturdifferenz zum festgelegten Zeitpunkt höher ist als die Zieltemperatur,

wenn die Klimaanlagenvorrichtung (101) sich in einem Heizvorgang befindet, die berechnete Betriebszeit des vorbereitenden Vorgangs zu korrigieren, die die nächste Betriebszeit ist, auf Grundlage einer dritten Temperaturdifferenz, wobei die dritte Temperaturdifferenz eine Differenz zwischen der Raumtemperatur Ta1 zum festgelegten Zeitpunkt und einer zweiten Temperatur ist, die um eine vorbestimmte Temperaturdifferenz zum festgelegten Zeitpunkt niedriger ist als die Zieltemperatur, **dadurch gekennzeichnet, dass** die Betriebszeitkorrektureinheit (1) ferner ausgelegt ist, um ein Einstellungsverhältnis auf Grundlage einer Innentemperatur Ta1 entsprechend dem festgelegten Zeitpunkt in einem zuvor durchgeführten vorbereitenden Vorgang und einen zulässigen Bereich ΔTm zum festgelegten Zeitpunkt in dem zuvor durchgeführten vorbereitenden Vorgang zu bestimmen, und die Betriebszeit des eingestellten vorbereitenden Vorgangs auf Grundlage des bestimmten Einstellungsverhältnisses zu bestimmen.

2. Klimaanlagensteuervorrichtung (201) nach Anspruch 1, wobei die Betriebszeitkorrektureinheit (1) Folgendes umfasst:

   eine repräsentative Zeitkorrektureinheit (13), die ausgelegt ist, um eine repräsentative Zeit zu korrigieren, wobei die repräsentative Zeit die Betriebszeit ist, die erforderlich ist, damit die Klimaanlagenvorrichtung (101) eine Innentemperatur in einem Raum durch eine Einheitstemperatur ändert; und
   eine zeitbezogene Berechnungseinheit (15), die ausgelegt ist, um eine Betriebsstartzeit der Klimaanlagenvorrichtung (101) auf Grundlage der repräsentativen Zeit zu berechnen, und

   wobei die zeitbezogene Berechnungseinheit (15) ausgelegt ist, um eine nächste Betriebsstartzeit, die auf Grundlage einer Temperaturdifferenz zwischen einer beliebigen Innentemperatur, nachdem ein in der Vergangenheit durchgeführter vorbereitender Vorgang beendet wurde bis der vorbereitende Vorgang eines nächsten Mals gestartet wird, und einer festgelegten Temperatur zum festgelegten Zeitpunkt im nächsten vorbereitenden Vorgang berechnet wird, und die repräsentative Zeit in dem nächsten vorbereitenden Vorgang an die Klimaanlagenvorrichtung (101) auszugeben.

3. Klimaanlagensteuervorrichtung (201) nach Anspruch 1 oder 2, wobei die Betriebszeitkorrektureinheit (1) ausgelegt ist, um eine nächste Betriebsstartzeit vorzurücken, wenn auf einen Verlauf von Heizvorgängen der Klimaanlagenvorrichtung (101) Bezug genommen und ermittelt wird, dass die Innentemperatur zum festgelegten Zeitpunkt in dem vorbereitenden Vorgang geringer ist als der zulässige Bereich zum festgelegten Zeitpunkt in dem vorbereitenden Vorgang ist, oder wenn auf einen Verlauf von Kühlvorgängen der Klimaanlagenvorrichtung (101) Bezug genommen und ermittelt wird, dass die Innentemperatur zum festgelegten Zeitpunkt in dem vorbereitenden Vorgang höher ist als der zulässige Bereich zum festgelegten Zeitpunkt in dem vorbereitenden Vorgang.

4. Klimaanlagensteuervorrichtung (201) nach Anspruch 1 oder 2, wobei die Betriebszeitkorrektureinheit (1) ausgelegt ist, um eine nächste Betriebsstartzeit zu verzögern, wenn auf einen Verlauf von Heizvorgängen der Klimaanlagenvorrichtung (101) Bezug genommen und ermittelt wird, dass die Innentemperatur zum festgelegten Zeitpunkt in dem vorbereitenden Vorgang höher ist als der zulässige Bereich zum festgelegten Zeitpunkt in dem vorbereitenden Vorgang ist, oder wenn auf einen Verlauf von Kühlvorgängen der Klimaanlagenvorrichtung (101) Bezug genommen und ermittelt wird, dass die Innentemperatur zum festgelegten Zeitpunkt in dem vorbereitenden Vorgang geringer ist als der zulässige Bereich zum festgelegten Zeitpunkt in dem vorbereitenden Vorgang.

5. Klimaanlagensteuervorrichtung (201) nach Anspruch 1 oder 2, wobei die Betriebszeitkorrektureinheit (1) ausgelegt ist, um
eine nächste Betriebsstartzeit abhängig von einem Ergebnis eines Vergleichs zwischen der Innentemperatur zum festgelegten Zeitpunkt in dem als nächstes durchgeführten vorbereitenden Vorgang und einem Mindestwert im zulässigen Bereich zu korrigieren, wenn auf einen Verlauf von Heizvorgängen der Klimaanlagenvorrichtung (101) Bezug genommen wird; und

die nächste Betriebsstartzeit abhängig von einem Ergebnis eines Vergleichs zwischen der Innentemperatur zum festgelegten Zeitpunkt in dem als nächstes durchgeführten vorbereitenden Vorgang und einem Maximalwert im zulässigen Bereich zu korrigieren, wenn auf einen Verlauf von Kühlvorgängen der Klimaanlagenvorrichtung (101) Bezug genommen wird.

6. Klimaanlagensteuervorrichtung (201) nach einem der Ansprüche 3 bis 5, wobei die Betriebszeitkorrektureinheit (1) ausgelegt ist, um eine nächste Betriebsstartzeit zu verzögern, wenn auf einen Verlauf von Heizvorgängen der Klimaanlagenvorrichtung (101) Bezug genommen und ermittelt wird, dass die Innentemperatur zum festgelegten Zeitpunkt im vorbereitenden Vorgang höher ist als der Mindestwert in dem zulässigen Bereich, oder, wenn auf einen Verlauf von Kühlvorgängen der Klimaanlagenvorrichtung (101) Bezug genommen und ermittelt wird, dass die Innentemperatur zum festgelegten Zeitpunkt in dem vorbereitenden Vorgang geringer ist als der Maximalwert im zulässigen Bereich.

7. Klimaanlagenvorrichtung (201) nach einem der Ansprüche 3 bis 6, wobei eine Vielzahl von Stromsparstufen, die unterschiedlichen Stromverbrauch aufweisen, zur Auswahl bereitgestellt sind,
wobei jede aus der Vielzahl von Leistungssparstufen und eine zulässige Bereichsbreite zur Bestimmung des zulässigen Bereichs zum festgelegten Zeitpunkt im als nächstes durchgeführten vorbereitenden Vorgang zusammenhängen, und
wobei die Betriebszeitkorrektureinheit (1) ausgelegt ist, um die zulässige Bereichsbreite abhängig von einer bestimmten Stromsparstufe zu bestimmen, die aus der Vielzahl von Stromsparstufen ausgewählt ist, und den zulässigen Bereich zum festgelegten Zeitpunkt in dem als nächstes durchgeführten vorbereitenden Vorgang bestimmt.

8. Klimaanlagensteuervorrichtung (201) nach einem der Ansprüche 3 bis 7, die ferner eine Personenbewegungsschätzeinheit (241) umfasst, die ausgelegt ist, um einzuschätzen, dass eine Person sich von außerhalb eines Hauses in den Raum bewegt, der zum festgelegten Zeitpunkt dem vorbereitenden Vorgang unterzogen wird,
wobei die Betriebszeitkorrektureinheit (1) ausgelegt ist, um den zulässigen Bereich zum festgelegten Zeitpunkt in dem als nächstes durchgeführten vorbereitenden Vorgang zu bestimmen, wenn die Einschätzung durch die Personenbewegungsschätzeinheit (241) vorgenommen wird.

9. Klimaanlagensteuervorrichtung (201) nach Anspruch 8, wobei die Betriebszeitkorrektureinheit (1) ausgelegt ist, um den zulässigen Bereich zum festgelegten Zeitpunkt in dem als nächstes durchgeführten vorbereitenden Vorgang abhängig von einer Temperaturdifferenz zwischen einer Temperatur der Außenluft und der Innentemperatur des Raums zu bestimmen, der dem vorbereitenden Vorgang unterzogen wird.

10. Klimaanlagensteuervorrichtung (201) nach Anspruch 8, wobei die Betriebszeitkorrektureinheit (1) ausgelegt ist, um den zulässigen Bereich zum festgelegten Zeitpunkt in dem als nächstes durchgeführten vorbereitenden Vorgang abhängig von einer Temperaturdifferenz zwischen einer Temperatur der Außenluft und der Zieltemperatur des Raums zu bestimmen, der dem vorbereitenden Vorgang unterzogen wird.

11. Klimaanlagensteuervorrichtung (201) nach einem der Ansprüche 1 bis 7, die ferner eine Personenbewegungsschätzeinheit (241) umfasst, die ausgelegt ist, um einzuschätzen, dass sich eine Person von innerhalb eines Hauses in den Raum bewegt, der dem vorbereitenden Vorgang zum festgelegten Zeitpunkt unterzogen wird,
wobei die Betriebszeitkorrektureinheit (1) ausgelegt ist, um den zulässigen Bereich zum festgelegten Zeitpunkt im als nächstes durchgeführten vorbereitenden Vorgang zu bestimmen, wenn die Einschätzung durch die Personenbewegungsschätzeinheit (241) vorgenommen wird.

12. Klimaanlagensteuervorrichtung (201) nach eine der Ansprüche 1 bis 11,
wobei die Klimaanlagenvorrichtung (101) eine Inneneinheit (113) und eine Außeneinheit (111) umfasst,
wobei die Inneneinheit (113) ferner einen Infrarotsensor (143) umfasst, der ausgelegt ist, um eine Temperatur eines Strukturelements der Inneneinheit (113) zu detektieren, und
wobei die Betriebszeitkorrektureinheit (1) ausgelegt ist, um von der Inneneinheit die durch den Infrarotsensor detektierte Temperatur des Strukturelements zu empfangen und eine anhand der Temperatur des Strukturelements berechnete Temperatur als Innentemperatur festzulegen.

13. Klimaanlagensteuervorrichtung (201) nach einem der Ansprüche 1 bis 12, die ferner eine kommunikationsbezogene Berechnungseinheit (224) umfasst, die ausgelegt ist, um eine Betriebsstartbenachrichtigung oder eine Erlaubnisbestimmungsanfrage nach außen auszugeben,
wobei die kommunikationsbezogene Berechnungseinheit (224) ausgelegt ist, um die Betriebsstartbenachrichtigung oder die Erlaubnisbestimmungsanfrage nach außen auszugeben, bevor eine nächste Betriebsstartzeit eintritt.

14. Klimaanlagenvorrichtungsklimaanlagensteuervorrichtung (201) nach einem der Ansprüche 1 bis 13, die ferner Folgendes umfasst:

einen Sensor (144) für die Anwesenheit von Menschen, der ausgelegt ist, um die Anwesenheit oder Abwesenheit einer Person in einem Raum, der dem vorbereitenden Vorgang unterzogen wird, zu detektieren, und
eine an-/abwesenheitsbezogene Berechnungseinheit (245), die ausgelegt ist, um einen Befehl zum Beenden der Klimatisierung oder einen Befehl zur Änderung der Zieltemperatur in Abhängigkeit von der Anwesenheit oder Abwesenheit einer durch den Sensor (144) für die Anwesenheit von Menschen detektierten Person auszugeben,
wobei, während die Klimaanlagenvorrichtung (101) den vorbereitenden Vorgang durchführt und wenn die Anwesenheit der Person durch den Sensor (144) für die Anwesenheit von Menschen zum festgelegten Zeitpunkt nicht detektiert wird, die an-/abwesenheitsbezogene Berechnungseinheit (245) ausgelegt ist, um den Befehl zum Beenden der Klimatisierung oder den Befehl zur Änderung der Zieltemperatur auszugeben.

## Revendications

1. Dispositif de commande de climatiseur (201), le dispositif de commande de climatiseur (201) étant configuré pour amener un climatiseur (101) à effectuer un fonctionnement préliminaire dans lequel le climatiseur (101) est actionné avant un moment spécifié pour régler une température de la pièce, le dispositif de commande de climatiseur (201) incluant une unité de correction de temps de fonctionnement (1) configurée pour corriger le temps de fonctionnement du fonctionnement préliminaire, le temps de fonctionnement étant la durée de fonctionnement du climatiseur (101), l'unité de correction de temps de fonctionnement (1) étant n outre configurée pour calculer le temps de fonctionnement du fonctionnement préliminaire du climatiseur (101) en fonction d'une première différence de température, la première différence de température étant une différence entre la température de la pièce Ta0 et une température cible Tm, dans lequel l'unité de correction de temps de fonctionnement (1) est en outre configurée pour corriger, lorsque le climatiseur (101) se trouve dans un fonctionnement de refroidissement, le temps de fonctionnement calculé du fonctionnement préliminaire, lequel est le temps de fonctionnement du fonctionnement du climatiseur (101) effectué ensuite, sur la base d'une deuxième différence de température, la deuxième différence de température étant une différence entre la température de la pièce Ta1 au moment spécifié et une première température qui est supérieure à la température cible d'une différence de température prédéterminée au moment spécifié, corriger, lorsque le climatiseur (101) se trouve dans un fonctionnement de chauffage, le temps de fonctionnement calculé du fonctionnement préliminaire, lequel est le temps de fonctionnement suivant, sur la base d'une troisième différence de température, la troisième différence de température étant une différence entre la température de la pièce Ta1 au moment spécifié et une seconde température qui est inférieure à la température cible d'une différence de température prédéterminée au moment spécifié, **caractérisé en ce que** l'unité de correction de temps de fonctionnement (1) est en outre configurée pour déterminer un rapport de réglage sur la base d'une température intérieure Ta1 correspondant au moment spécifié dans un fonctionnement préliminaire effectué précédemment et d'une plage admissible ΔTm au moment spécifié, dans le fonctionnement préliminaire effectué précédemment, et déterminer le temps de fonctionnement du fonctionnement préliminaire réglé sur la base du rapport de réglage déterminé.

2. Dispositif de commande de climatiseur (201) selon la revendication 1, dans lequel l'unité de correction de temps de fonctionnement (1) inclut une unité de correction de temps représentatif (13) configurée pour corriger un temps représentatif, le temps représentatif étant le temps de fonctionnement nécessaire pour que le climatiseur (101) change une température intérieure dans une pièce d'une unité de température ; et une unité de calcul associée au temps (15) configurée pour calculer un moment de début de fonctionnement du climatiseur (101) sur la base du temps représentatif, et dans lequel l'unité de calcul associée au temps (15) est configurée pour fournir un moment de début de fonctionnement suivant, qui est déterminé sur la base d'une différence de température entre une température intérieure arbitraire allant d'un moment suivant un moment où un fonctionnement préliminaire effectué dans le passé est interrompu jusqu'à un moment précédent le moment où le fonctionnement préliminaire d'un temps suivant a débuté et une température spécifiée au moment spécifié dans le fonctionnement préliminaire suivant, et le temps repré-

**EP 3 076 091 B1**

sentatif dans le fonctionnement préliminaire suivant, au climatiseur (101).

3. Dispositif de commande de climatiseur (201) selon la revendication 1 ou 2, dans lequel l'unité de correction de temps de fonctionnement (1) est configurée pour avancer un moment de début de fonctionnement suivant en référence à un historique d'opérations de chauffage du climatiseur (101) et lorsqu'on détermine que la température intérieure au moment spécifié dans le fonctionnement préliminaire est inférieure à la plage admissible au moment spécifié dans le fonctionnement préliminaire, ou en référence à un historique d'opérations de refroidissement du climatiseur (101) et lorsqu'on détermine que la température intérieure au moment spécifié dans le fonctionnement préliminaire est supérieure à la plage admissible au moment désigné dans le fonctionnement préliminaire.

4. Dispositif de commande de climatiseur (201) selon la revendication 1 ou 2, dans lequel l'unité de correction de temps de fonctionnement (1) est configurée pour retarder un moment de début de fonctionnement suivant en référence à un historique d'opérations de chauffage du climatiseur (101) et lorsqu'on détermine que la température intérieure au moment spécifié dans le fonctionnement préliminaire effectué ensuite est supérieure à la plage admissible au moment spécifié dans le fonctionnement préliminaire, ou en référence à un historique d'opérations de refroidissement du climatiseur (101) et lorsqu'on détermine que la température intérieure au moment spécifié dans le fonctionnement préliminaire est inférieure à la plage admissible au moment désigné dans le fonctionnement préliminaire.

5. Dispositif de commande de climatiseur (201) selon la revendication 1 ou 2, dans lequel l'unité de correction de temps de fonctionnement (1) est configurée pour
corriger un moment de début de fonctionnement suivant en fonction, en référence à un historique d'opérations de chauffage du climatiseur (101), d'un résultat de comparaison entre la température intérieure au moment désigné dans le fonctionnement préliminaire effectué ensuite et une valeur minimale dans la plage admissible ; et
corriger le moment de début de fonctionnement suivant en fonction, en référence à un historique d'opérations de refroidissement du climatiseur (101), d'un résultat de comparaison entre la température intérieure au moment spécifié dans le fonctionnement préliminaire et une valeur maximale dans la plage admissible.

6. Dispositif de commande de climatiseur (201) selon l'une quelconque des revendications 3 à 5, dans lequel l'unité de correction de temps de fonctionnement (1) est configurée pour retarder un moment de début de fonctionnement suivant en référence à un historique d'opérations de chauffage du climatiseur (101) et lorsqu'on détermine que la température intérieure au moment spécifié dans le fonctionnement préliminaire est supérieure à la valeur minimale dans la plage admissible, ou en référence à un historique d'opérations de refroidissement du climatiseur (101) et lorsqu'on détermine que la température intérieure au moment spécifié dans le fonctionnement préliminaire est inférieure à la valeur maximale dans la plage admissible.

7. Dispositif de commande de climatiseur (201) selon l'une quelconque des revendications 3 à 6,
dans lequel une pluralité de niveaux d'économie d'énergie qui sont différents du point de vue de la consommation d'énergie sont fournis pour sélection,
dans lequel chacun de la pluralité de niveaux d'économie d'énergie et une largeur de plage admissible pour déterminer la plage admissible au moment spécifié dans le fonctionnement préliminaire effectué ensuite sont liés, et
dans lequel, l'unité de correction de temps de fonctionnement (1) est configurée pour déterminer la largeur de plage admissible en fonction d'un niveau d'économie d'énergie particulier sélectionné parmi la pluralité de niveaux d'économie d'énergie, et détermine la plage admissible au moment désigné dans le fonctionnement préliminaire effectué ensuite.

8. Dispositif de commande de climatiseur (201) selon l'une quelconque des revendications 3 à 7, comprenant en outre une unité d'estimation de déplacement de personne (241) configurée pour estimer qu'une personne se déplace de l'extérieur d'une maison vers la pièce faisant l'objet du fonctionnement préliminaire au moment spécifié,
dans lequel l'unité de correction de temps de fonctionnement (1) est configurée pour déterminer la plage admissible au moment désigné dans le fonctionnement préliminaire effectué ensuite lorsque l'estimation est effectuée par l'unité d'estimation de déplacement de personne (241).

9. Dispositif de commande de climatiseur (201) selon la revendication 8, dans lequel l'unité de correction de temps de fonctionnement (1) est configurée pour déterminer la plage admissible au moment spécifié dans le fonctionnement préliminaire effectué ensuite en fonction d'une différence de température entre une température de l'air extérieur et la température intérieure de la pièce faisant l'objet du fonctionnement préliminaire.

**10.** Dispositif de commande de climatiseur (201) selon la revendication 8, dans lequel l'unité de correction de temps de fonctionnement (1) est configurée pour déterminer la plage admissible au moment spécifié dans le fonctionnement préliminaire effectué ensuite en fonction d'une différence de température entre une température de l'air extérieur et la température cible de la pièce faisant l'objet du fonctionnement préliminaire.

**11.** Dispositif de commande de climatiseur (201) selon l'une quelconque des revendications 1 à 7, comprenant en outre une unité d'estimation de déplacement de personne (241) configurée pour estimer qu'une personne se déplace de l'intérieur d'une maison vers la pièce faisant l'objet du fonctionnement préliminaire au moment spécifié,
dans lequel l'unité de correction de temps de fonctionnement (1) est configurée pour déterminer la plage admissible au moment désigné dans le fonctionnement préliminaire effectué ensuite lorsque l'estimation est effectuée par l'unité d'estimation de déplacement de personne (241).

**12.** Dispositif de commande de climatiseur (201) selon l'une quelconque des revendications 1 à 11,
dans lequel le climatiseur (101) inclut une unité intérieure (113) et une unité extérieure (111),
dans lequel l'unité intérieure (113) inclut en outre un capteur infrarouge (143) configuré pour détecter une température d'un élément structurel de l'unité intérieure (113), et
dans lequel l'unité de correction de temps de fonctionnement (1) est configurée pour recevoir de l'unité intérieure la température de l'unité structurelle telle que détectée par le capteur infrarouge, et pour définir une température calculée à partir de la température de l'élément structurel en tant que température intérieure.

**13.** Dispositif de commande de climatiseur (201) selon l'une quelconque des revendications 1 à 12, comprenant en outre une unité de calcul associée à la communication (224) configurée pour fournir une notification de début de fonctionnement ou une demande de détermination de permission à un extérieur,
dans lequel l'unité de calcul associée à la communication (224) est configurée pour fournir la notification de début de fonctionnement ou la demande de détermination de permission à l'extérieure avant qu'un moment de début de fonctionnement suivant n'arrive.

**14.** Dispositif de commande de climatiseur (201) selon l'une quelconque des revendications 1 à 13, comprenant en outre un capteur de présence humaine (144) configuré pour détecter la présence ou l'absence d'une personne dans une pièce faisant l'objet du fonctionnement préliminaire, et
une unité de calcul associée à la présence/l'absence (245) configurée pour fournir une instruction d'interrompre la climatisation ou une instruction de changer la température cible en fonction de la présence ou de l'absence d'une personne détectée par le capteur de présence humaine (144),
dans lequel, alors que le climatiseur (101) effectue le fonctionnement préliminaire et lorsque la présence de la personne n'est pas détecté par le capteur de présence humaine (144) au moment spécifié, l'unité de calcul associée à la présence/l'absence (245) est configurée pour fournir l'instruction d'interrompre la climatisation ou l'instruction de changer la température cible.

FIG. 1

# FIG. 2

**FIRST STATE (HEATING OPERATION)**

TEMPERATURE

INDOOR TEMPERATURE Ta1 AT DESIGNATED TIME

TARGET TEMPERATURE Tm (INTEGER VALUE)

ALLOWABLE RANGE $\Delta$Tm

MINIMUM TEMPERATURE Tk IN ALLOWABLE RANGE

INITIAL INDOOR TEMPERATURE Ta0

INDOOR TEMPERATURE

ACTIVATE: PREHEATING START TIME (OPERATION START TIME)

DESIGNATED TIME

TIME AT WHICH TEMPERATURE REACHES TARGET

TIME

PREHEATING TIME t

51  52

**REPRESENTATIVE TIME CORRECTION PROCESS**

REPRESENTATIVE TIME t0' IN SECOND STATE $=$ REPRESENTATIVE TIME t0 IN FIRST STATE $\times$ RATIO BETWEEN MINIMUM TEMPERATURE Tk IN ALLOWABLE RANGE AND INDOOR TEMPERATURE Ta1 AT DESIGNATED TIME IN FIRST STATE

$$= t0 \times \frac{Tk - Ta0}{Ta1 - Ta0}$$

$$= t0 \times \frac{(Tm - \Delta Tm) - Ta0}{Ta1 - Ta0}$$

53

**OPERATION TIME COMPUTATION PROCESS**

PREHEATING TIME t' (OPERATION TIME) $= |$(INITIAL INDOOR TEMPERATURE Ta0) $-$ (TARGET TEMPERATURE Tm)$| \times$ REPRESENTATIVE TIME t0'

54

**SECOND STATE (HEATING OPERATION)**

TEMPERATURE

INDOOR TEMPERATURE Ta1 AT DESIGNATED TIME

TARGET TEMPERATURE Tm (INTEGER VALUE)

ALLOWABLE RANGE $\Delta$Tm

INDOOR TEMPERATURE

MINIMUM TEMPERATURE Tk IN ALLOWABLE RANGE

INITIAL INDOOR TEMPERATURE Ta0

ACTIVATE: PREHEATING START TIME (OPERATION START TIME)

DESIGNATED TIME

TIME AT WHICH TEMPERATURE REACHES TARGET

TIME

PREHEATING TIME t'

# FIG. 3

**FIRST STATE (COOLING OPERATION)**

TEMPERATURE

INITIAL INDOOR TEMPERATURE Ta0

INDOOR TEMPERATURE

MAXIMUM TEMPERATURE Tk IN ALLOWABLE RANGE

INDOOR TEMPERATURE Ta1 AT DESIGNATED TIME

TARGET TEMPERATURE Tm (INTEGER VALUE)

ALLOWABLE RANGE ΔTm

TIME

ACTIVATE: PRECOOLING START TIME (OPERATION START TIME)

DESIGNATED TIME

TIME AT WHICH TEMPERATURE REACHES TARGET

PRECOOLING TIME t

55  56

**REPRESENTATIVE TIME CORRECTION PROCESS**

REPRESENTATIVE TIME t0' IN SECOND STATE = REPRESENTATIVE TIME t0 IN FIRST STATE × RATIO BETWEEN MAXIMUM TEMPERATURE Tk IN ALLOWABLE RANGE AND INDOOR TEMPERATURE Ta1 AT DESIGNATED TIME IN FIRST STATE

$$= t0 \times \frac{Ta0-Tk}{Ta0-Ta1}$$

$$= t0 \times \frac{Ta0-(Tm+\Delta Tm)}{Ta0-Ta1}$$

57

**OPERATION TIME COMPUTATION PROCESS**

PRECOOLING TIME t' (OPERATION TIME) = |(INITIAL INDOOR TEMPERATURE Ta0) -(TARGET TEMPERATURE Tm)| × REPRESENTATIVE TIME t0'

58

**SECOND STATE (COOLING OPERATION)**

TEMPERATURE

INDOOR TEMPERATURE

INITIAL INDOOR TEMPERATURE Ta0

MAXIMUM TEMPERATURE Tk IN ALLOWABLE RANGE

INDOOR TEMPERATURE Ta1 AT DESIGNATED TIME

TARGET TEMPERATURE Tm (INTEGER VALUE)

ALLOWABLE RANGE ΔTm

TIME

ACTIVATE: PRECOOLING START TIME (OPERATION START TIME)

DESIGNATED TIME

TIME AT WHICH TEMPERATURE REACHES TARGET

PRECOOLING TIME t'

FIG. 4

FIRST STATE (HEATING OPERATION)

TEMPERATURE

INDOOR TEMPERATURE Ta1 AT
DESIGNATED TIME

INDOOR
TEMPER-
ATURE

TARGET
TEMPERATURE Tm
(INTEGER VALUE)

ALLOWABLE RANGE ΔTm

INITIAL INDOOR
TEMPERATURE Ta0

MINIMUM TEMPERATURE Tk
IN ALLOWABLE RANGE

ACTIVATE: PREHEATING START TIME    DESIGNATED                    TIME
(OPERATION START TIME)                TIME        TIME AT WHICH
                                                 TEMPERATURE
                                                 REACHES TARGET

PREHEATING TIME t

6 1

6 2

REPRESENTATIVE TIME CORRECTION PROCESS

6 3

OPERATION TIME COMPUTATION PROCESS

6 4

SECOND STATE (HEATING OPERATION)

TEMPERATURE

INDOOR TEMPERATURE

TARGET
TEMPERATURE Tm
(INTEGER VALUE)

ALLOWABLE
RANGE ΔTm

MINIMUM
TEMPERATURE Tk IN
ALLOWABLE RANGE

INITIAL INDOOR
TEMPERATURE Ta0

INDOOR TEMPERATURE Ta1
AT DESIGNATED TIME

ACTIVATE: PREHEATING START TIME DESIG-            TIME
(OPERATION START TIME)          NATED   TIME AT WHICH
                                TIME    TEMPERATURE
                                        REACHES TARGET

PREHEATING TIME t'

FIG. 5

FIRST STATE (HEATING OPERATION)

TEMPERATURE

TARGET TEMPERATURE Tm (INTEGER VALUE)

ALLOWABLE RANGE $\Delta$Tm

MINIMUM TEMPERATURE Tk IN ALLOWABLE RANGE

INDOOR TEMPERATURE

INITIAL INDOOR TEMPERATURE Ta0

INDOOR TEMPERATURE Ta1 AT DESIGNATED TIME

ACTIVATE: PREHEATING START TIME (OPERATION START TIME)

DESIGNATED TIME

TIME

TIME AT WHICH TEMPERATURE REACHES TARGET

PREHEATING TIME t

6 5

6 6

REPRESENTATIVE TIME CORRECTION PROCESS

6 7

OPERATION TIME COMPUTATION PROCESS

6 8

SECOND STATE (HEATING OPERATION)

TEMPERATURE

TARGET TEMPERATURE Tm (INTEGER VALUE)

INDOOR TEMPERATURE Ta1 AT DESIGNATED TIME

ALLOWABLE RANGE $\Delta$Tm

INDOOR TEMPERATURE

INITIAL INDOOR TEMPERATURE Ta0

MINIMUM TEMPERATURE Tk IN ALLOWABLE RANGE

ACTIVATE: PREHEATING START TIME (OPERATION START TIME)

DESIGNATED TIME

TIME

TIME AT WHICH TEMPERATURE REACHES TARGET

PREHEATING TIME t'

FIG. 6

FIRST STATE (COOLING OPERATION)

TEMPERATURE

INITIAL INDOOR TEMPERATURE Ta0

INDOOR TEMPERATURE

MAXIMUM TEMPERATURE Tk IN ALLOWABLE RANGE

ALLOWABLE RANGE ΔTm

TARGET TEMPERATURE Tm (INTEGER VALUE)

INDOOR TEMPERATURE Ta1 AT DESIGNATED TIME

ACTIVATE: PRECOOLING START TIME (OPERATION START TIME)

DESIGNATED TIME

TIME

TIME AT WHICH TEMPERATURE REACHES TARGET

PRECOOLING TIME t

7 1
7 2

REPRESENTATIVE TIME CORRECTION PROCESS

7 3

OPERATION TIME COMPUTATION PROCESS

7 4

SECOND STATE (COOLING OPERATION)

TEMPERATURE

INITIAL INDOOR TEMPERATURE Ta0

INDOOR TEMPERATURE

MAXIMUM TEMPERATURE Tk IN ALLOWABLE RANGE

ALLOWABLE RANGE ΔTm

INDOOR TEMPERATURE Ta1 AT DESIGNATED TIME

TARGET TEMPERATURE Tm (INTEGER VALUE)

ACTIVATE: PRECOOLING START TIME (OPERATION START TIME)

DESIG-NATED TIME

TIME

TIME AT WHICH TEMPERATURE REACHES TARGET

PRECOOLING TIME t'

FIG. 7

FIRST STATE (COOLING OPERATION)

TEMPERATURE

INITIAL INDOOR
TEMPERATURE Ta0

INDOOR TEMPERATURE

INDOOR TEMPERATURE Ta1 AT
DESIGNATED TIME

MAXIMUM
TEMPERATURE Tk IN
ALLOWABLE RANGE

ALLOWABLE RANGE ΔTm

TARGET
TEMPERATURE Tm
(INTEGER VALUE)

ACTIVATE: PRECOOLING START TIME
(OPERATION START TIME)

DESIGNATED
TIME

TIME

TIME AT WHICH
TEMPERATURE
REACHES TARGET

PRECOOLING TIME t

7 5

7 6

REPRESENTATIVE TIME CORRECTION PROCESS

7 7

OPERATION TIME COMPUTATION PROCESS

7 8

SECOND STATE (COOLING OPERATION)

TEMPERATURE

INITIAL INDOOR
TEMPERATURE Ta0

INDOOR TEMPERATURE Ta1 AT
DESIGNATED TIME

MAXIMUM
TEMPERATURE Tk
IN ALLOWABLE
RANGE

INDOOR TEMPERATURE

ALLOWABLE RANGE ΔTm

TARGET
TEMPERATURE Tm
(INTEGER VALUE)

ACTIVATE: PRECOOLING START TIME
(OPERATION START TIME)

DESIGNATED
TIME

TIME

TIME AT WHICH
TEMPERATURE
REACHES TARGET

PRECOOLING TIME t'

FIG. 8

FIG. 9

## FIG. 10

246

STORAGE UNIT

261        262        263

| POWER SAVING LEVEL DATA TABLE | → | FIRST MAPPING TABLE | → | ALLOWABLE RANGE WIDTH DATA TABLE |
|---|---|---|---|---|

264        265

TEMPERATURE DIFFERENCE DATA TABLE

TEMPERATURE DIFFERENCE BETWEEN TEMPERATURE OF OUTDOOR AIR AND INDOOR TEMPERATURE FOR PRECOOLING/PREHEATING

TEMPERATURE DIFFERENCE BETWEEN TEMPERATURE OF OUTDOOR AIR AND TARGET TEMPERATURE FOR PRECOOLING/PREHEATING

TEMPERATURE DIFFERENCE BETWEEN INDOOR TEMPERATURE OF ROOM IN WHICH USER HAS STAYED AND INDOOR TEMPERATURE FOR PRECOOLING/PREHEATING

TEMPERATURE DIFFERENCE BETWEEN INDOOR TEMPERATURE OF ROOM IN WHICH USER HAS STAYED AND TARGET TEMPERATURE FOR PRECOOLING/PREHEATING

SECOND MAPPING TABLE

266        267

| LEARNING INFORMATION DATA | REPRESENTATIVE TIME HISTORY DATA | REPRESENTATIVE TIME INITIAL VALUE DATA |
|---|---|---|

FIG. 11

```
              ( START TIMER CONTROL )
                          │
                          ▼
S11   ┌──────────────────────────────────────┐
      │    ACQUIRE PRESENCE-IN-ROOM            │
      │         INFORMATION DATA               │
      └──────────────────────────────────────┘
                          │
                          ▼
S12   ┌──────────────────────────────────────┐
      │   DETERMINE PRESENCE-IN-ROOM           │
      │ START TIME BASED ON PRESENCE-IN-       │
      │       ROOM INFORMATION DATA            │
      └──────────────────────────────────────┘
                          │
                          ▼
S13   ┌──────────────────────────────────────┐
      │ ACQUIRE LEARNING INFORMATION DATA      │
      └──────────────────────────────────────┘
                          │
                          ▼
S14   ┌──────────────────────────────────────┐
      │      ACQUIRE AIR-CONDITIONING          │
      │         INFORMATION DATA               │
      └──────────────────────────────────────┘
                          │
                          ▼
S15   ┌──────────────────────────────────────┐
      │   PRECOOLING/PREHEATING TIME           │
      │      COMPUTATION PROCESS               │
      └──────────────────────────────────────┘
                          │
                          ▼
S16   ┌──────────────────────────────────────┐
      │     DETERMINE PRECOOLING/              │
      │     PREHEATING START TIME              │
      └──────────────────────────────────────┘
                          │
                          ▼
S17        ╱──────────────────────────╲    NO
          ╱  HAS PRECOOLING/PREHEATING  ╲─────
          ╲    START TIME ARRIVED?      ╱
           ╲──────────────────────────╱
                      YES │
                          ▼
S18   ┌──────────────────────────────────────┐
      │      REFRIGERATION CYCLE               │
      │       OPERATION PROCESS                │
      └──────────────────────────────────────┘
                          │
                          ▼
S19        ╱──────────────────────────╲    NO
          ╱   HAS PRESENCE-IN-ROOM      ╲─────
          ╲    START TIME ARRIVED?      ╱
           ╲──────────────────────────╱
                      YES │
                          ▼
S20   ┌──────────────────────────────────────┐
      │      ACQUIRE AIR-CONDITIONING          │
      │         INFORMATION DATA               │
      └──────────────────────────────────────┘
                          │
                          ▼
S21   ┌──────────────────────────────────────┐
      │  CHANGE LEARNING INFORMATION DATA      │
      │     BASED ON AIR-CONDITIONING          │
      │   INFORMATION DATAPROCESS              │
      └──────────────────────────────────────┘
                          │
                          ▼
              ( END TIMER CONTROL )
              (      PROCESS      )
```

# FIG. 12

START PRECOOLING/PREHEATING
TIME COMPUTATION PROCESS

S 3 1    DETERMINE, BASED ON INDOOR TEMPERATURE
AT PRESENCE-IN-ROOM START TIME AND
TEMPERATURE IN ALLOWABLE RANGE,
REPRESENTATIVE TIME, WHICH IS TIME
REQUIRED FOR INDOOR TEMPERATURE
TO CHANGE BY 1 DEGREE C

S 3 2    DETERMINE TEMPERATURE DIFFERENCE BETWEEN
CURRENT TEMPERATURE AND TARGET
TEMPERATURE FOR PRECOOLING/PREHEATING

S 3 3    DETERMINE PRECOOLING/PREHEATING TIME
BASED ON REPRESENTATIVE TIME AND
TEMPERATURE DIFFERENCE

END PRECOOLING/PREHEATING
TIME COMPUTATION PROCESS

FIG. 13

START REFRIGERATION CYCLE
OPERATION PROCESS

S 4 1    EXECUTE PROPORTIONAL CONTROL

S 4 2

IS CHANGE WITH TIME OF INDOOR
TEMPERATURE SMALLER THAN PRESET
SETTING VALUE?    N O

Y E S

S 4 3    EXECUTE INTEGRAL CONTROL

S 4 4

HAS INDOOR TEMPERATURE
CHANGED ABRUPTLY?    N O

Y E S

S 4 5    EXECUTE DERIVATIVE CONTROL

END REFRIGERATION CYCLE
OPERATION PROCESS

FIG. 14

FIG. 15

VARIOUS CONTROL COMMANDS

2 0 1

USER INPUT

AIR-CONDITIONING APPARATUS CONTROL MODULE

REFRIGERATION CYCLE CONTROL UNIT

2 2 1    2 2 2    2 2 3

PROPOR-TIONAL CONTROL UNIT

INTEGRAL CONTROL UNIT

DERIV-ATIVE CONTROL UNIT

REFRIG-ERATION CYCLE ACTIVATION COMMAND

2 1 1    2 1 3

TIMER CONTROL UNIT

2 4 3    2 4 2   PRE- 2 4 1

OPERATION START TIME DATA (PRECOOLING/ PREHEATING START TIME DATA)

2 4 4

FOURTH COMPU-TATION UNIT

THIRD COMPUTATION UNIT

OPERATION TIME CORRECTION UNIT

PRESENCE-IN-ROOM START TIME DATA (DESIGNATED TIME DATA)

SENCE-IN-ROOM INFOR-MATION DATA

SECOND COMPU-TATION UNIT

FIRST COMPU-TATION UNIT

SETTING VALUE DATA

ESTIMA-TION VALUE DATA

LEARNING COMMAND

AIR-CONDI-TIONING INFOR-MATION DATA

FIFTH COMPU-TATION UNIT

PRESENCE-IN-ROOM START TIME DATA (DESIGNATED TIME DATA)

LIMITED TARGET TEMPERATURE DATA

AIR-CONDITIONING INFORMATION DATA

2 4 5

LIMITED TARGET TEMPERATURE TABLE

2 7 0

THIRD MAPPING TABLE

2 6 9

LEARNING INFORMATION DATA

TARGET TEMPERATURE TABLE

2 6 8

LEARNING INFORMATION DATA

2 4 6

FIRST DATA CORRECTION UNIT

STORAGE UNIT

2 4 7

COMMAND TO LIMIT TARGET TEMPERATURE

FIG. 16

# FIG. 17

# FIG. 18

VARIOUS CONTROL
COMMANDS

201

USER INPUT

AIR-CONDITIONING APPARATUS
CONTROL MODULE

COMMAND TO STOP
AIR CONDITIONING

REFRIGERATION CYCLE CONTROL UNIT

221    222    223

COMMAND TO CHANGE
TARGET TEMPERATURE

| PROPOR-TIONAL CONTROL UNIT | INTEGRAL CONTROL UNIT | DERIV-ATIVE CONTROL UNIT |

REFRIGERATION
CYCLE ACTIVATION
COMMAND

211    213

TIMER CONTROL UNIT

243    242    PRE- 241

OPERATION START
244  TIME DATA
(PRECOOLING/
PREHEATING
START TIME DATA)

PRESENCE-IN-
ROOM START
TIME DATA
(DESIGNATED
TIME DATA)

SENCE-
IN-ROOM
INFOR-
MATION
DATA

SETTING
VALUE
DATA

FOURTH COMPU-TATION UNIT

THIRD COMPUTATION UNIT

OPERATION TIME CORRECTION UNIT

SECOND COMPU-TATION UNIT

FIRST COMPU-TATION UNIT

ESTIMA-
TION
VALUE
DATA

AIR-CONDI-
TIONING INFOR-
MATION DATA

LEARNING COMMAND

PRESENCE-IN-
ROOM START TIME DATA
(DESIGNATED TIME DATA)

AIR-CONDITIONING
INFORMATION DATA

FIFTH COMPU-TATION UNIT

245

LEARNING
INFORMATION
DATA

246

LEARNING
INFORMATION
DATA

STORAGE UNIT

PRESENCE/ABSENCE DETERMINATION DATA
REMOTE CONTROLLER OPERATION HISTORY DATA
USE STATUS DATA ON VARIOUS DEVICES
INDOOR POWER CONSUMPTION DATA
HUMAN PRESENCE SENSOR DETECTION DATA
ROOM DOOR OPENING/CLOSING STATUS DATA
COMMUNICATION STATUS DATA
POSITION INFORMATION DATA ON VARIOUS DEVICES

FIG. 19

# FIG. 20

RECORDING MEDIUM

AIR-CONDITIONING APPARATUS CONTROL MODULE
2 0 1

RECORDING MEDIUM

HEMS CONTROL MODULE
5 1 0

RECORDING MEDIUM

VIRTUAL HEMS CONTROL MODULE
5 5 2    5 5 1

VIRTUAL REMOTE CONTROLLER MODULE

4 0 1 _ 1

4 0 1 _ 2

4 0 1 _ 3

1 0 1

AIR-CONDITIONING APPARATUS

AIR-CONDITIONING APPARATUS CONTROL MODULE
2 0 1

3 2 3

HEMS CONTROLLER

HEMS CONTROL MODULE
5 1 0

3 2 8

SERVER DEVICE

STORAGE UNIT
5 3 2 _ 1

4 1 1

SERVER DEVICE

STORAGE UNIT
5 3 2 _ 2

3 2 7

5 3 2

STORAGE UNIT

5 5 1

VIRTUAL HEMS CONTROL MODULE

5 5 2

VIRTUAL REMOTE CONTROLLER MODULE

2 0 1

AIR-CONDITIONING APPARATUS CONTROL MODULE

HEMS CONTROL MODULE
5 1 0

4 2 2    A P I

4 2 1    O S

**REFERENCES CITED IN THE DESCRIPTION**

**Patent documents cited in the description**

- JP H1061995 A

- JP SHO60142136 B